# EUROPEAN PATENT SPECIFICATION

(11) **EP 3 151 246 B1**
(45) Date of publication and mention of the grant of the patent: **27.02.2019**
(21) Application number: 15799213.2
(22) Date of filing: 10.03.2015
(51) Int. Cl.: G21C 17/003, G21C 17/01, G21C 19/20

(54) **NONDESTRUCTIVE DETECTION ROBOT FOR PRESSURE VESSEL OF NUCLEAR REACTOR, AND DETECTION METHOD THEREFOR**
ZERSTÖRUNGSFREIER DETEKTIONSROBOTER FÜR DEN DRUCKBEHÄLTER EINES KERNREAKTORS UND DETEKTIONSVERFAHREN DAFÜR
ROBOT UTILISÉ DANS LA DÉTECTION NON DESTRUCTIVE S'APPLIQUANT À UNE CUVE SOUS PRESSION DE RÉACTEUR NUCLÉAIRE, ET PROCÉDÉ DE DÉTECTION ASSOCIÉ

(30) Priority: 29.05.2014 CN 201410233953
(43) Date of publication of application: 05.04.2017
(73) Proprietor: CGN Inspection Technology Company, Ltd., Futian District Shenzhen, Guangdong 518031 (CN); Suzhou Nuclear Power Research Institute, Suzhou, Jiangsu 215004 (CN); China General Nuclear Power Group, Shenzhen, Guangdong 518031 (CN); CGN Power Co., Ltd., Shenzhen, Guangdong 518031 (CN)
(72) Inventor: LI, Ming, Suzhou, Jiangsu 215004 (CN); LIN, Ge, Suzhou, Jiangsu 215004 (CN); CHEN, Huaidong, Suzhou, Jiangsu 215004 (CN); WU, Jianrong, Suzhou, Jiangsu 215004 (CN); HONG, Maocheng, Suzhou, Jiangsu 215004 (CN); MA, Guanbing, Suzhou, Jiangsu 215004 (CN); WANG, Xianbin, Suzhou, Jiangsu 215004 (CN); WANG, Keqing, Suzhou, Jiangsu 215004 (CN); XIAO, Xuezhu, Suzhou, Jiangsu 215004 (CN); LV, Tianming, Suzhou, Jiangsu 215004 (CN); JIN, Guodong, Suzhou, Jiangsu 215004 (CN); ZHANG, Pengfei, Suzhou, Jiangsu 215004 (CN); ZENG, Chenming, Suzhou, Jiangsu 215004 (CN); LIU, Jinhong, Suzhou, Jiangsu 215004 (CN); LIN, Zhongyuan, Suzhou, Jiangsu 215004 (CN)
(74) Representative: Klunker IP Patentanwälte PartG mbB
(86) International application number: PCT/CN2015/073926
(87) International publication number: WO 2015/180521

(56) References cited:
- CN-A- 103 761 996
- CN-A- 103 761 998
- CN-A- 103 817 692
- CN-A- 103 985 424
- CN-U- 203 839 056
- FR-A1- 2 259 419
- JP-A- 2010 256 076
- JP-A- 2013 205 379
- MUTKA A ET AL: "Control system for reactor vessel inspection manipulator", CONTROL APPLICATIONS, (CCA)&INTELLIGENT CONTROL, (ISIC), 2009 IEEE, IEEE, PISCATAWAY, NJ, USA, 8 July 2009 (2009-07-08), pages 1312-1318, XP031542813, ISBN: 978-1-4244-4601-8

## Description

### TECHNICAL FIELD OF THE INVENTION

The present invention relates to the field of the nondestructive inspection for a pressure vessel of a nuclear reactor, particularly to a nondestructive inspection robot for a pressure vessel of a CEPR-typed nuclear reactor and an inspection method thereof.

### BACKGROUND OF THE INVENTION

A nuclear reactor pressure vessel is one of the most important parts of a nuclear power plant, is used to fix, support and contain the reactor core and all the reactor components, and is the only non-replaceable large parts during the entire life of the nuclear power plant. The quality of the nuclear reactor pressure vessel is the key to ensure the normal and safe operation of the nuclear power system. In order to confirm the quality of the nuclear reactor pressure vessel, in the inspection specifications and outlines of the nuclear power plant and the nuclear power units, the mandatory requirements for non-destructive inspection of the welds and other parts of the pressure vessel are specified, and the pre-service and in-service inspections of the pressure vessel are carried out before putting into operation and after a certain time interval of operation, respectively.

The main body of the nuclear reactor pressure vessel is a cylinder, and the upper part of the cylinder is connected with a hemispherical upper head by bolt assemblies and is welded with a flange, the lower part of the cylinder is welded with a transition ring section which is welded with a hemispherical lower head, a water inlet nozzle and a water outlet nozzle are welded at the cylinder body in a radially spaced manner, and the water inlet nozzle and the water outlet nozzle are respectively welded with a safety end which is welded with the main pipe. Taking Taishan CEPR-typed reactor of China as an example, the in-service inspection scope of nuclear reactors includes: the internal overlaying welding layers inside the reactor pressure vessel, the connecting weld between the reactor pressure vessel transition ring section and the inner radial guide block, the bolt hole thread of the flange, the connection weld between the nozzle cylinder section and the nozzle, the dissimilar metal weld between the nozzle and the safe end, the circumferential weld between respective sections of the cylinder body of the reactor pressure vessel (between the nozzle section and the reactor core section of the cylinder body, between the reactor core section and the transition ring section of the cylinder body), the circumferential weld between the transition ring section and the lower head, the bond zone between the internal welding layer and the base metal inside the nuclear reactor pressure vessel, the bolt hole ligament area of the flange, the surfacing layer of the strong neutron irradiation area of the reactor core, and the like.

Usually nondestructive testings for the nuclear reactor pressure vessel mainly are ultrasonic inspection technology, video inspection technology and ray inspection technology. Among them, a contact-type conventional ultrasound examination requires ultrasonic probe must be kept in contact with the pressure vessel surface, and the ultrasonic waves of the probe are hit on both sides of the weld from a variety of angles.

As the reactor pressure vessel inspections take up the critical path of the nuclear power plant overhaul, the efficiency and reliability of the inspection apparatus are essential. The inspection apparatus of the prior art generally does not achieve full coverage of all inspection sections, and it needs to get out for multiple times during the inspection.

FR 2 259 419 discloses a machine for inspecting the inside of a reactor pressure vessel, under water, comprises a central mast supported by a tripod from the top flange of a reactor pressure vessel. The mast is provided with vertical movement by cable and guide rails and has a variety of moving arms with centralizing and guiding devices which can carry television cameras, ultra-sonic probes etc. and which have hydraulic position indication. The indicators do not distort the signals from the television cameras.

### SUMMARY OF THE INVENTION

Aiming at the above problems, an objective of the present invention is to provide a nondestructive inspection robot for a pressure vessel of a nuclear reactor and an inspection method thereof, the inspection scope thereof covering all inspection items prescribed in the pre-service/ in-service inspection outline of a nuclear reactor pressure vessel, it needs only one time to get out of the water to complete all the inspection and has a high reliability.

To solve the above problems, the technical solutions of the present invention employs are:

A nondestructive inspection robot for a pressure vessel of a nuclear reactor, the pressure vessel comprising a cylinder body, a lower head, a tubular nozzle, and a flange with a bolt hole and a bolt hole ligament area, the robot comprises:
a stand column assembly stretchable along an axial direction thereof;
a plurality of support legs for supporting the stand column assembly, one end of each support leg being fixedly connected to the stand column assembly and another end being used for detachably connecting onto the pressure vessel so that when the plurality of support legs is connected to the pressure vessel, the central axis of the stand column assembly and the axis line of the pressure vessel coincide with each other;
a first mechanical arm provided with a first probe assembly for scanning the cylinder body of the pressure vessel;
a second mechanical arm provided with a second probe assembly for scanning the lower head of the pressure vessel;
a third mechanical arm provided with a third probe assembly for scanning the tubular nozzle of the pressure vessel;
a fourth mechanical arm provided with a fourth probe assembly for scanning the screw thread of the bolt hole of the flange of the pressure vessel and a fifth probe assembly for scanning the bolt hole ligament area of the flange of the pressure vessel;
a main rotary joint rotatably connected to a lower part of the stand column assembly about the axial direction of the stand column assembly, the second mechanical arm being rotatably connected to the main rotary joint about a direction perpendicular to the axial direction of the stand column assembly by means of a swinging joint, and other mechanical arms being detachably connected to the main rotary joint;
wherein, ends of each mechanical arms have an end rotary joint rotating about the axial line of its own, the first mechanical arms and the second mechanical arm both have a first stretchable joint, the first stretchable joint of the first mechanical arms is located between the main rotary joint and the end rotary joint thereof, the first stretchable joint of the second mechanical arms is located between the swinging joint and the end rotary joint thereof, the third mechanical arm and the fourth mechanical arm both have a second stretchable joint between the main rotary joint and the end rotary joint thereof, the end rotary joint of the fourth mechanical arm has its axial line parallel to the axial direction of the pressure vessel when the plurality of support legs is connected to the pressure vessel and the end rotary joint is connected to a lower part of the second stretchable joint, the first probe assembly, the second probe assembly, the third probe assembly and the fourth probe assembly are respectively mounted onto the end rotary joints of each mechanical arm, and the fifth probe assembly is mounted onto the second stretchable joint of the fourth mechanical arm and has an axial direction perpendicular to the axial direction of the pressure vessel when the plurality of support legs is connected to the pressure vessel.

Preferably, the end rotary joint comprises a fixing seat having an inner cavity and detachably connected to the first stretchable joint or the second stretchable joint, a worm movably provided on the fixing seat and driven to rotate by a first motor, a worm gear fitting with the worm and located within the inner cavity, a first rotation shaft coaxially connected to the worm gear, and two first synchronous belt pulleys synchronously driven by a synchronous belt, the first rotation shaft is arranged through the inner cavity which is full of gas, a plurality of bearings and dynamic seal assemblies are provided between the first rotation shaft and the fixing seat, the first probe assembly, the second probe assembly, the third probe assembly and the fourth probe assembly are respectively mounted on the first rotation shaft, one of the first synchronous belt pulleys is coaxially connected to the first rotation shaft of respective end rotary joints, a first coder is connected with the other one of the first synchronous belt pulleys for collecting and feeding back information of the angle position of the first rotation shaft, and a second coder is provided on the first motor for collecting and feeding back information of the rotational angle and the rotational speed of the first motor.

Preferably, the first stretchable joint comprises three layers of first sleeves sleeving over each other, two first steel wire ropes, a first lead screw nut driven to rotate by a second motor, and a first lead screw fitting with the first lead screw nut, the first sleeve has a first end and a second end opposite to each other, the second end of an outer layer of the first sleeve of the first stretchable joint of the first mechanical arm is connected to the main rotary joint, the second end of an outer layer of the first sleeve of the first stretchable joint of the second mechanical arm is connected to the swinging joint, the first end of an inner layer of the first sleeve is fixedly connected to and axially parallel to an end of the first lead screw and also connected to the end rotary joint, the first end and the second end of the layer of the first sleeve between the outer layer and the inner layer are both rotatably provided with a first pulley, the two first steel wire ropes are respectively wound over one first pulley and two ends thereof are respectively fixedly connected to the first end of the outer layer and the second end of the inner layer of the first sleeve, the winding directions of the two first steel wire ropes are opposite, a third coder is provided on the second motor for collecting and feeding back information of the rotational angle and the rotational speed of the second motor, a first proximity switch is provided on the first stretchable joint for calibrating an initial position and a stop position of the inner layer of the sleeve.

Preferably, the second stretchable joint comprises three layers of second sleeves sleeving over each other, two second steel wire ropes, a second lead screw nut driven to rotate by a third motor, and a second lead screw fitting with the second lead screw nut, the second sleeve has a first end and a second end opposite to each other, a middle part of an outer layer of the second sleeve is connected to the main rotary joint, the first end of an inner layer of the second sleeve is connected to the end rotary joint, the second lead screw is rotatably provided on and axially parallel to the outer layer of the second sleeve about its own axial line, the layer of the second sleeve between the outer layer and the inner layer is fixedly connected with the second lead screw nut, the first end and the second end of the inner layer of the second sleeve are both rotatably provided with a second pulley, the two second steel wire ropes are respectively wound over one second pulley and two ends thereof are respectively fixedly connected to the first end of the outer layer and the second end of the inner layer of the second sleeve, the winding directions of the two second steel wire ropes are opposite, and a fourth coder is provided on the third motor for collecting and feeding back information of the rotational angle and the rotational speed of the third motor.

Preferably, the swinging joint comprises a drive sprocket driven to rotate by a fourth motor, a driven sprocket driven with the drive sprocket via a chain, and a worm reducer driven with the driven sprocket, an output shaft of the worm reducer being detachably connected with the second mechanical arm.

More preferably, the swinging joint further comprises a second synchronous belt pulley driven with the worm reducer, the second synchronous belt pulley being connected with a fifth coder for collecting and feeding back information of the rotational angle of the output shaft of the worm reducer.

Preferably, the main rotary joint comprises a mounting seat with a cavity detachably connected to the lower end of the stand column assembly, a fifth motor provided on the mounting seat, a drive gear driven to rotate by the fifth motor, a master gear engaging with the drive gear, a second rotation shaft coaxially connected to the master gear, the second rotation shaft being arranged through the cavity and a lower end thereof being connected with respective mechanical arms.

More preferably, the main rotary joint further comprises an anti-backlash gear engaging with the master gear, a sixth coder connected onto the anti-backlash gear for collecting and feeding back information of the rotational angle and the rotational speed of the fifth motor, at least two second proximity switches provided on the mounting seat for calibrating an initial position and a maximum stroke position of the second rotary shaft.

More preferably, the drive gear and the master gear are both helical gears.

Preferably, the nondestructive inspection robot for a pressure vessel of a nuclear reactor further comprises a windlass mechanism for bringing the stand column assembly to stretch out and draw back.

More preferably, the stand column assembly comprises two sleeved layers of third sleeves each with an upper end and a lower end opposite to each other, an end of the support leg is fixedly connected to an outer layer of the third sleeve, the windlass mechanism comprises a support frame, the upper end of the outer layer of the third sleeve is fixedly connected to the support frame of the windlass mechanism, the upper end of the inner layer of the third sleeve is below the windlass mechanism and rotatably provided with a third pulley, a steel wire rope of the windlass mechanism is wound on the third pulley from below and an end thereof is connected to the upper end of the outer layer of the third sleeve.

More preferably, the stand column assembly comprises a plurality of sleeved layers of third sleeves with an upper end and a lower end opposite to each other, the third sleeves are respectively denoted as B(1), B(2), ..., B(2i+1) from an outer layer to an inner layer, wherein i=1, 2, ..., the upper end of B(1) is fixedly connected to the windlass mechanism, the upper ends and the lower ends of B(2), B(3), ..., B(2i-1), B(2i) as well as the upper end of B(2i+1) are all rotationally provided with a third pulley, the windlass mechanism comprises a support frame and two steel wire ropes for down-passing and pulling up respectively, the upper end of B(1) is fixedly connected to the support frame of the windlass mechanism, wherein an end of one of the steel wire ropes is fixedly connected to the lower end of B(1) and wound on the third pulleys of the lower end of B(2), ..., the upper end of B(2i-1), the lower end of B(2i), and the upper end of B(2i+1) one after another, an end of the other one of the steel wire ropes is fixedly connected to the lower end of B(1) and wound on the third pulleys of the upper end of B(2), ..., the lower end of B(2i-1), the upper end of B(2i), and the lower end of B(2i+1) one after another, winding directions of the two steel wire ropes on each third sleeve are opposite.

Further, the windlass mechanism further comprises a first winding drum and a second winding drum arranged on the support frame and driven to rotate by a sixth motor, steel wire ropes wound on the first winding drum and the second winding drum respectively for down-passing and pulling up, and a multiple-stage reducer mechanism located within the sixth motor as well as the first winding drum and the second winding drum, the first winding drum and the second winding drum have the same winding direction of the steel wire ropes but rotate in opposite directions, the steel wire ropes are arranged through between the first winding drum and the second winding drum and connected onto the stand column assembly, and the windlass mechanism further comprises a seventh coder arranged on the multiple-stage reducer mechanism for collecting and feeding back information of the rotational angle of the first winding drum and the second winding drum.

Preferably, the robot further comprises a first camera assembly on a lower part of the main rotary joint for monitoring respective mechanical arms, and a second camera assembly on the second mechanical arms for checking the whole inner wall of the pressure vessel.

More preferably, an extension block is connected between the first stretchable joint and the end rotary joint of the second mechanical arms, and the second camera assembly is arranged on the extension block.

Preferably, the number of the support legs is three, and when the plurality of support legs are connected to pressure vessel, a guide column is provided in a part of the bolt holes of the flange of the pressure vessel respectively, the axial directions of the guide column and the stand column assembly are parallel to each other, a through hole is opened on two of the support legs and fits with the guide column, the two support legs are arranged through two guide columns to support the stand column assembly, respectively.

Preferably, the fourth mechanical arm further comprises a connection block detachably connected to the second stretchable joint thereof, and the connection block has three end parts, a first end part thereof being connecting to the second stretchable joint, a second end part being provided with the fifth probe assembly, and a third end part being connected to the end rotary joint.

An inspection method of the foregoing nondestructive inspection robot for a pressure vessel of a nuclear reactor, comprises the following steps in the proper order:
A: arranging two support legs through two of the guide columns, and in proper order, video checking the lower head, ultrasonic scanning a circumferential weld between a transition ring cylinder section and the lower head, a bond zone between a base metal and an internal overlaying welding layer, a connection weld between a tubular nuzzle cylinder section and the tubular nuzzle, the bolt hole ligament area of the flange except where the support legs are located, and the screw thread of the bolt hole of the flange except where the support legs are located;
B: arranging two support legs through another two of the guide columns, and in proper order, ultrasonic scanning the screw thread of the bolt hole of the flange not scanned in step A, the bolt hole ligament area of the flange not scanned in step A, a dissimilar metal connection weld between the tubular nuzzle and a safe end, and circumferential welds between the tubular nuzzle cylinder section and a reactor core cylinder section as well as the reactor core cylinder section and the transition ring cylinder section, and checking the lower head;
C: getting the nondestructive inspection robot out of the water.

Due to the use of the above-mentioned technical solutions, the invention has the advantages over the prior art: by adjusting the axial positions of respective probe assemblies by means of stretching out and drawing back of the stand column assembly in the axial direction, adjusting the radial positions of respective probe assemblies along the pressure vessel by stretching out and drawing back of respective mechanical arms along respective axial directions, adjusting the circumferential positions of respective probe assemblies along the pressure vessel via the main rotary joint, adjusting the angles of respective probe assemblies via the main rotary joint, and adjusting the axial position of the probe assembly for scanning the lower head within the lower head, the present invention can achieve a full coverage of inspection parts of the nuclear reactor pressure vessel, and can complete all inspection items prescribed in the in-service inspection outline of a nuclear reactor pressure vessel by getting out of the water only in one time.

### BRIEF DESCRIPTION OF THE DRAWINGS

Figure 1 is a structure schematic diagram of a pressure vessel of a nuclear reactor;
Figure 2 is a structure schematic diagram of the present invention;
Figure 3 is a principle schematic diagram of the present invention;
Figure 4 is a structure schematic diagram of a windlass mechanism of the present invention;
Figure 5 is a structure schematic diagram of a stand column assembly of the present invention;
Figure 6 is a structure schematic diagram of a stand column assembly in another embodiments of the present invention;
Figure 7 is a structure schematic diagram of a main rotary joint of the present invention;
Figure 8 is a structure schematic diagram of a swinging joint of the present invention;
Figure 9 is a structure schematic diagram of a first stretchable joint of the present invention;
Figure 10 is a structure schematic diagram of a second stretchable joint of the present invention;
Figure 11 is a structure schematic diagram of an end rotary joint of the present invention.

Wherein, 1 - pressure vessel; 10 - cylinder body; 101 - tubular nuzzle cylinder section; 102 - reactor core cylinder section; 103 - transition ring cylinder section; 11 - flange; 111 - bolt hole; 112 - bolt hole ligament area; 12 - lower head; 13 - tubular nuzzle; 14 - safe end; 16 - guide block;
20 - windlass mechanism; 200 - support frame; 201 - sixth motor; 202 - multiple-stage reducer mechanism; 203 - first gear; 204 - second gear; 205 - first winding drum; 206 - second winding drum; 207 - seventh coder; 208 - contracting brake mechanism; 209 - emergency drawing back mechanism;
21 - stand column assembly; 211 - B(1); 212 - B(2); 213 - B(3); 214 - B(4); 215 - B(5); 216 - third pulley;
- support leg; 220 - through hole;
23 - main rotary joint; 230 - mounting seat; 231 - fifth motor; 232 - drive gear; 233 - master gear; 234 - second rotation shaft; 235 - anti-backlash gear; 236 - sixth coder; 237 - second proximity switch;
24a - first probe assembly; 24b - second probe assembly; 24c - third probe assembly; 24d - fourth probe assembly; 24e - fifth probe assembly;
25a - first mechanical arm; 251a - extension block; 25b - second mechanical arm; 25c - third mechanical arm; 25d - fourth mechanical arm; 252 - connection block;
- swinging joint; 261 - fourth motor; 262 - drive sprocket; 263 - chain; 264 - driven sprocket; 265 - worm reducer; 2650 - output shaft; 266 - second synchronous belt pulley; 267 - fifth coder;
27 - first stretchable joint; 271 - first sleeve; 272 - first steel wire rope; 273 - second motor; 274 - first lead screw nut; 275 - first lead screw; 276 - first pulley;
28 - second stretchable joint; 281 - second sleeve; 282 - second steel wire rope; 283 - third motor; 284 - second lead screw; 2840 - support frame; 285 - second lead screw nut; 286 - second pulley;
29 - end rotary joint; 291 - fixing seat; 292 - first motor; 293 - worm; 294 - worm gear; 295 - first rotation shaft; 296 - first synchronous belt pulley; 297 - first coder;
30a - first camera assembly; 30b - second camera assembly.

### DETAILED DESCRIPTION OF EXEMPLARY EMBODIMENTS

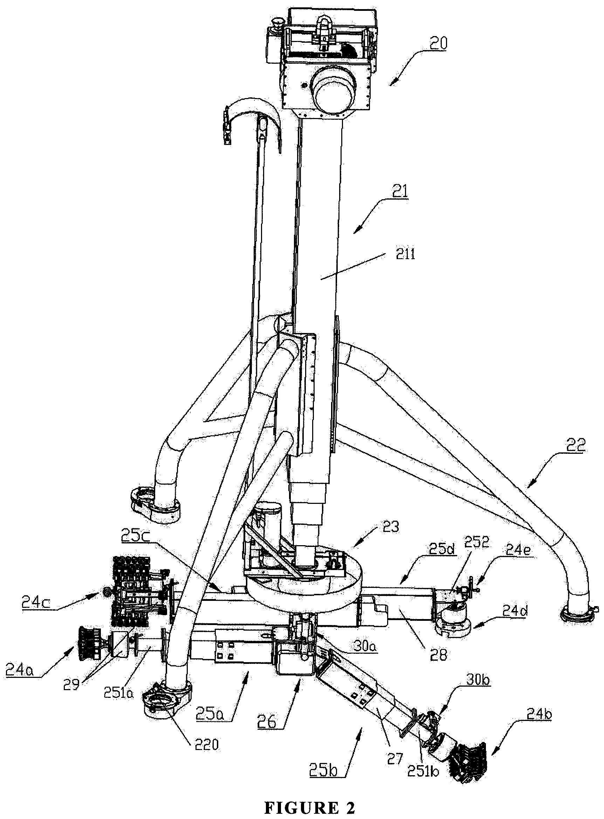

In the following, the preferable embodiments of the present invention are explained in detail combining with the accompanying drawings so that the advantages and features of the present invention can be easily understood by the skilled persons in the art, and thus it is clear to define the protective scope of the present invention. As referred herein, upper and lower in the present invention respectively correspond to the upper and lower side of Figure 2 on paper, and the axial direction of the stand column and the axial direction of the pressure vessel 1 respectively correspond to the up and down directions of Figure 2 on paper.

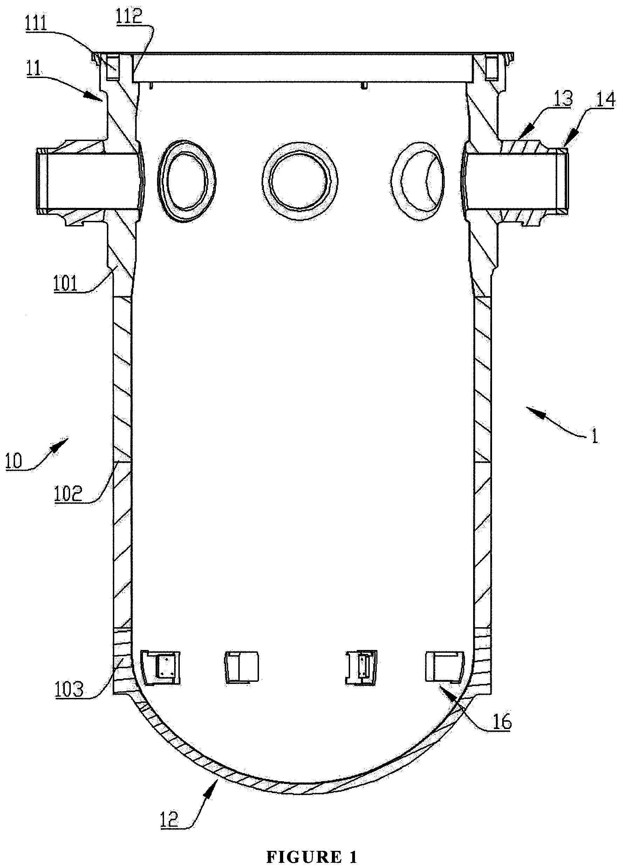

Figure 1 is a structure schematic diagram of a pressure vessel 1 of a CEPR-typed nuclear reactor in the prior art. As shown in Figure 1, the pressure vessel 1 comprises a cylinder body 10, a flange 11, a hemispherical lower head 12, and a tubular nuzzle 13. Wherein, the cylinder body 10 consists of a tubular nuzzle cylinder section 101, a reactor core cylinder section 102, and a transition ring cylinder section 103 successively welded from upper to lower. An upper part of the tubular nuzzle cylinder section 101 is welded with the flange 11, an upper end surface of the flange 11 is opened with a circle of bolt holes 111 along the circumference, the bolt holes 111 are used to connect with a hemispherical upper head and for a guide column inserting in during inspection, and the flange 11 has a circle of bolt hole ligament area 112 right opposite the circle of bolt holes 111. A plurality of tubular nuzzles 13 are spaced opened on the tubular nuzzle cylinder section 101 along the circumference, a part of the tubular nuzzles 13 are connected with a main water inlet pipe (not shown), and another part of the tubular nuzzles 13 are connected with a main water outlet pipe (not shown), ends of the tubular nuzzles 13 are welded with a circle of safe ends 14 welded with the main water inlet/ outlet pipes, and the safe ends 14 and the tubular nuzzles 13 are dissimilar metal welded. A plurality of guide blocks 16 is spaced provided on the inner wall of the transition ring cylinder section 103 along the axial direction, and the guide blocks 16 are welded with the transition ring cylinder section 103. All inner walls of the base metal of the pressure vessel 1 are welded with an internal overlaying welding layer for antisepsis. The pre-service/ in-service inspection items of the whole pressure vessel 1 include: a, scanning the internal overlaying welding layer; b, scanning the connecting weld between the transition ring section and the guide blocks 16; c, scanning the thread of the bolt holes 111 of the flange 11; d, scanning the connection weld between the nozzle cylinder section 101 and the tubular nozzles 13; e, scanning the dissimilar metal weld between the tubular nozzles 13 and the safe ends 14; f, scanning the circumferential welds between the nozzle cylinder section 101 and the reactor core cylinder section 102 as well as between the reactor core cylinder section 102 and the transition ring cylinder section 103; g, scanning the circumferential weld between the transition ring cylinder section 103 and the lower head 12; h, scanning the bond zone between the base metal and the internal overlaying welding layer; i, scanning the bolt hole ligament area 112 of the flange 11.

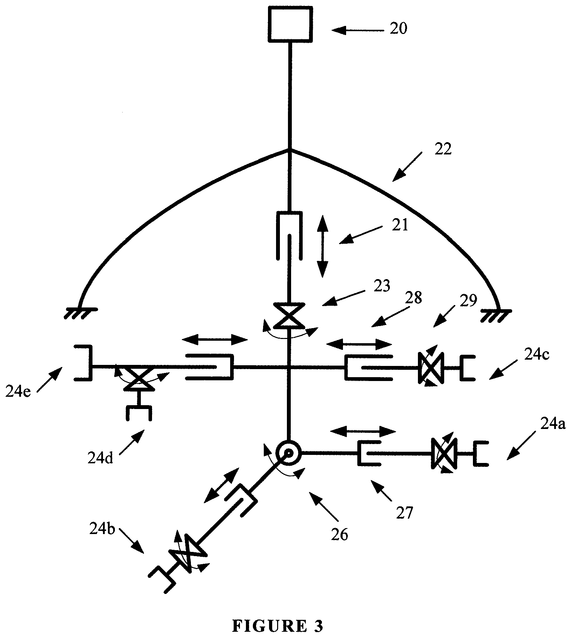

As shown in Figures 2 and 3, a nondestructive inspection robot for a pressure vessel 1 of a CEPR-typed nuclear reactor, comprises:
a stand column assembly 21 stretchable along an axial direction thereof;
a plurality of support legs 22 for supporting the stand column assembly 21, one end of each support leg 22 being fixedly connected to the stand column assembly 21 and another end being detachably connected onto the pressure vessel 1 so that the central axis of the stand column assembly 21 and the axis line of the pressure vessel 1 coinciding with each other;
a first probe assembly 24a for scanning the cylinder body 10 of the pressure vessel 1;
a second probe assembly 24b for scanning the lower head 12 of the pressure vessel 1, and also used for scanning the cylinder body 10 of the pressure vessel 1;
a third probe assembly 24c for scanning the tubular nuzzles 13 of the pressure vessel 1;
a fourth probe assembly 24d for scanning the thread of the bolt holes 111 of the flange 11 of the pressure vessel 1;
a fifth probe assembly 24e for scanning the bolt hole ligament area 112 of the flange 11 of the pressure vessel 1;
a plurality of mechanical arms stretchable along their own axial directions, the first probe assembly 24a, the second probe assembly 24b, the third probe assembly 24c, the fourth probe assembly 24d and the fifth probe assembly 24e are respectively provided on the ends of five mechanical arms, or the first probe assembly 24a, the second probe assembly 24b, the third probe assembly 24c and the fourth probe assembly 24d are respectively provided on the ends of four mechanical arms and the fifth probe assembly 24e is provided on the end of one of the four mechanical arms.
a main rotary joint 23 rotatably connected to a lower part of the stand column assembly 21 about the axial direction of the stand column assembly 21, wherein the mechanical arm provided with the second probe assembly 24b is rotatably connected to the main rotary joint 23 about a direction perpendicular to the axial direction of the stand column assembly 21 by means of a swinging joint 26, and other mechanical arms are detachably connected to the main rotary joint 23;

Specifically in this embodiment, the mechanical arms comprise a first mechanical arm 25a rotatably provided with the first probe assembly 24a, a second mechanical arm 25b rotatably provided with the second probe assembly 24b, a third mechanical arm 25c rotatably provided with the third probe assembly 24c, and a fourth mechanical arm 25d rotatably provided with the fourth probe assembly 24d, the first probe assembly 24a, the second probe assembly 24b and the third probe assembly 24c rotate about the axial directions of the mechanical arms (25a, 25b, 25c) respectively, the fourth probe assembly 24d is connected to the lower part of an end of the fourth mechanical arm 25d and rotates about a direction parallel to the axial direction of the pressure vessel 1, and the fifth probe assembly 24e is fixedly provided on the fourth mechanical arm 25d. The first probe assembly 24a, the second probe assembly 24b, the third probe assembly 24c, the fourth probe assembly 24d and the fifth probe assembly 24e all employ an ultrasonic sounding manner, and all comprise a probe frame connected with the respective mechanical arm and one or more ultrasonic probes provided on the probe frame. Wherein the structures of the first probe assembly 24a, the second probe assembly 24b and the third probe assembly 24c are disclosed in Chinese patents CN101894593, CN101894592 and CN2014100255602, respectively. The probe of the fifth probe assembly 24e is provided right opposite the bolt hole ligament area 112 of the flange 11, and during scanning, there is no need to adjust the angle of the probe, and the axial position and the radial position of the probe are adjusted via the main rotary joint 23 and a second stretchable joint of the fourth mechanical arm 25d.

The ends of the first mechanical arm 25a, the second mechanical arm 25b and third mechanical arm 25c as well as the lower part of the end of the fourth mechanical arm 25d all have an end rotary joint 29; the first mechanical arms 25a and the second mechanical arm 25b both have a first stretchable joint 27, the first stretchable joint 27 of the first mechanical arms 25a is located between the main rotary joint 23 and the end rotary joint 29 thereof, and the first stretchable joint 27 of the second mechanical arms 25b is located between the swinging joint 26 and the end rotary joint 29 thereof; the third mechanical arm 25c and the fourth mechanical arm 25d both have a second stretchable joint 28 between the main rotary joint 23 and the end rotary joint 29, the end rotary joint 29 of the fourth mechanical arm 25d has its axial line parallel to the axial direction of the pressure vessel and is connected to a lower part of the second stretchable joint 28; the fourth mechanical arm 25d further comprises a connection block 252 detachably connected to the second stretchable joint 28 thereof, and the connection block has three end parts, a first end part thereof being connected to the second stretchable joint 28, a second end part being provided with the fifth probe assembly 24e, and a third end part being connected to the end rotary joint 29; the axial direction of the end rotary joint of the fourth mechanical arm 25d is parallel to the axial direction of the pressure vessel, and the first probe assembly 24a, the second probe assembly 24b, the third probe assembly 24c and the fourth probe assembly 24d are mounted onto the end rotary joints 29 of respective mechanical arms, respectively.

As shown in Figure 3, the nondestructive inspection robot for a pressure vessel of a nuclear reactor comprises three kinds of straight-line moving joints, i.e., one stand column assembly 21, two first stretchable joints 27 and two second stretchable joints 28, as well as three kinds of rotating joints, i.e., one main rotary joint 23, one swinging joint 26 and four end rotary joints 29, the above mentioned joints and the stand column assembly 21 all are modularly provided, and the connection manners between any two of them all are detachable connection for ease of disassembly, replacement and reassembly. Wherein the stand column assembly 21 is used to adjust the depth position of respective probe assemblies in the axial direction of the pressure vessel 1, or the axial position for short; the main rotary joint 23 is used to adjust the position of respective probe assemblies in 360 degrees of one circumference of the pressure vessel 1, or the circumferential position for short; the swinging joint 26 is used to adjust the position of the second probe assembly 24b within the lower head 12; the first stretchable joint 27 is used to adjust the position of the first probe assembly 24a and the second probe assembly 24b within the cylinder body 10 and the lower head 12 along the radial direction, or radial position for short, the second stretchable joint 28 is used to adjust the position of the third probe assembly 24c within the tubular nuzzle 13 as well as the fourth probe assembly 24d and the fifth probe assembly 24e on the flange 11, and the travel distance of the first stretchable joint 27 is shorter than that of the second stretchable joint 28. The respective joints are described one by one in the following.

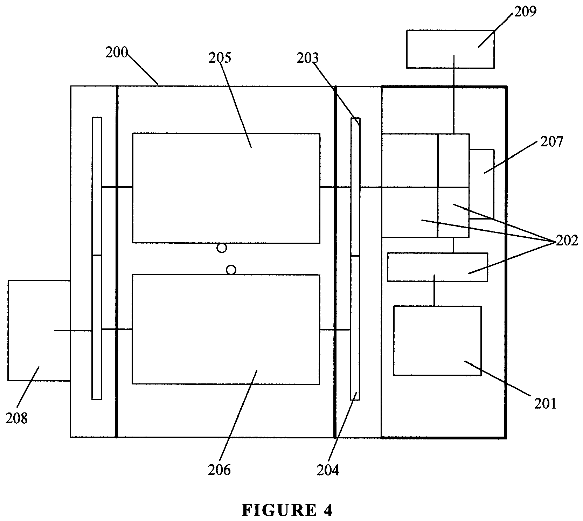

The nondestructive inspection robot for a pressure vessel of a nuclear reactor further comprises a windlass mechanism 20 for bringing the stand column assembly 21 to stretch out and draw back. As shown in Figure 4, the windlass mechanism 20 mainly implements the stretching out and drawing back of a steel wire rope, and comprises a first winding drum 205 and a second winding drum 206 arranged on a support frame 200 and driven to rotate by a sixth motor 201, steel wire ropes wound on the first winding drum 205 and the second winding drum 206 respectively for down-passing and pulling up, and a multiple-stage reducer mechanism 202 located within the sixth motor 201 as well as the first winding drum 205 and the second winding drum 206, the first winding drum 205 and the second winding drum 206 have the same winding direction of the steel wire ropes but rotate in opposite directions, the steel wire ropes are arranged through between the first winding drum 205 and the second winding drum 206 and connected onto the stand column assembly 21. The windlass mechanism 20 further comprises a seventh coder 207 arranged on the multiple-stage reducer mechanism 202 for collecting and feeding back information of the rotational angle of the first winding drum 205 and the second winding drum 206. The multiple-stage reducer mechanism 202 comprises a primary level reducer, a secondary level reducer, a tertiary level reducer, a first gear 203 and a second gear 204, wherein the first gear 203 and the second gear 204 engage with each other, the first winding drum 205 and the first gear 203 are coaxially connected, the second winding drum 206 and the second gear 204 are coaxially connected, the first winding drum 205 and the second winding drum 206 drive one steal wire rope to pass down and another steal wire rope to pull up. For safety, the windlass mechanism 20 further comprises a contracting brake mechanism 208 and an emergency drawing back mechanism 209, and when the sixth motor 201 has no action, the contracting brake mechanism 208 holds the rotation shaft of the sixth motor 201 tightly to keep the steel wire ropes still. The emergency drawing back mechanism 209 may draw back the steel wire ropes when the motor fails. The seventh coder 207 is arranged on the secondary level reducer for measuring the rotational angle of the first winding drum 205, and the controller of the nondestructive inspection robot may calculate the length of the steel wire rope being drawn back and stretched out by conversion after receiving the feedback information from the seventh coder 207.

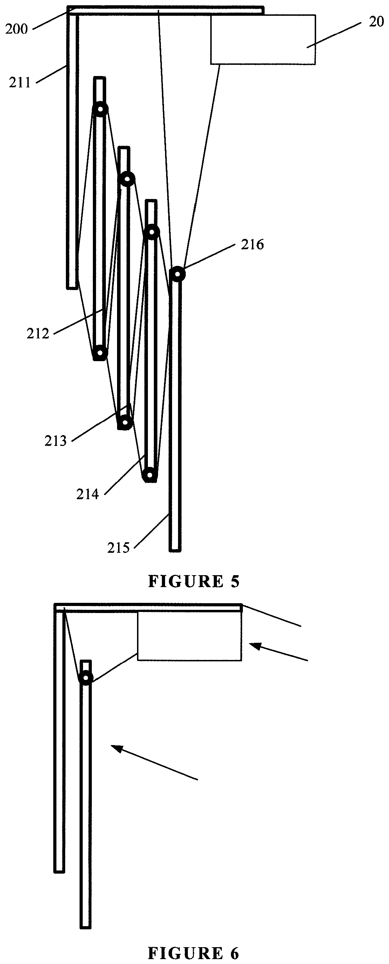

As shown in Figure 5, the stand column assembly 21 comprises five sleeved layers of third sleeves with an upper end and a lower end opposite to each other, the third sleeves are respectively denoted as B(1), ..., B(5) (211 - 215) from an outer layer to an inner layer, the upper end of B(1) is fixedly connected to the windlass mechanism 20, the upper ends and the lower ends of B(2), B(3), and B(4) as well as the upper end of B(5) are all rotationally provided with a third pulley 216, the upper end of B(1) is fixedly connected to the support frame 200 of the windlass mechanism 20, wherein an end of one of the steel wire ropes is fixedly connected to the lower end of B(1) and wound on the third pulleys 216 of the lower end of B(2), the upper end of B(3), the lower end of B(4), and the upper end of B(5) one after another, the two steel wire ropes on each third sleeve are in opposite winding directions and wind through the two third pulleys of B(2), B(3), and B(4) from outside, here, the outside is the opposite to the inner side, and the inner side refers to the side between the two third pulleys 216 of the upper and lower ends of the same third sleeve.

In another implementations, as shown in Figure 6, the stand column assembly 21 comprises two sleeved layers of third sleeves each with an upper end and a lower end opposite to each other, an end of the support leg 22 is fixedly connected to an outer layer of the third sleeve, the windlass mechanism 20 comprises a support frame 200, the upper end of the outer layer of the third sleeve is fixedly connected to the support frame 200 of the windlass mechanism 20, the upper end of the inner layer of the third sleeve is below the windlass mechanism and rotatably provided with a third pulley 216, a steel wire rope of the windlass mechanism 20 is wound on the third pulley 216 from below and an end thereof is connected to the upper end of the outer layer of the third sleeve. The travel distance of the stand column assembly 21 of this structure is considerably shorter than that of the stand column assembly 21 with five layers of third sleeves.

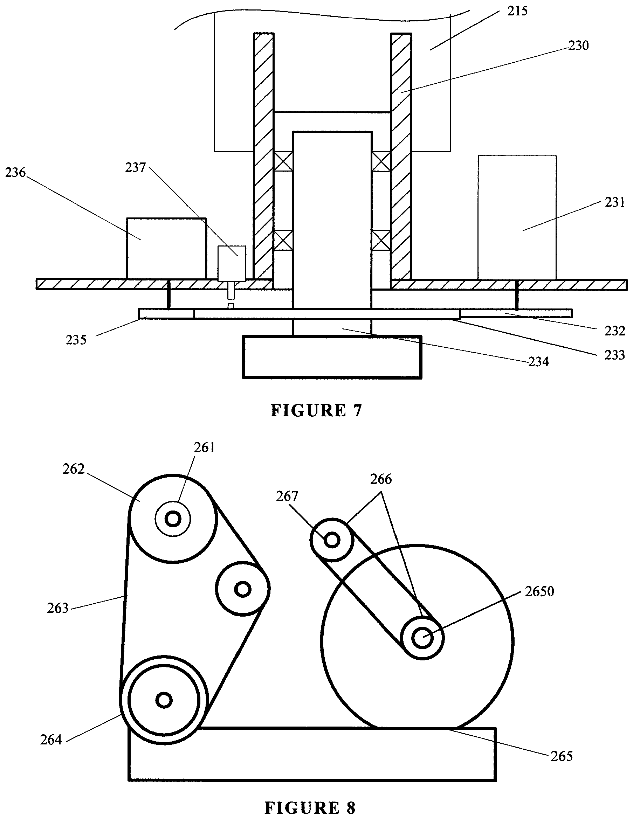

As shown in Figure 7, the main rotary joint 23 is used to achieve the whole rotation of all mechanical arms at the lower part, and comprises a mounting seat 230 with a cavity and detachably connected to the lower end of the innermost layer (B(5)) of the third sleeve of the stand column assembly 21, a fifth motor 231 provided on the mounting seat 230, a drive gear 232 driven to rotate by the fifth motor, a master gear 233 engaging with the drive gear 232, a second rotation shaft 234 coaxially connected to the master gear 233, the second rotation shaft 234 being arranged through the cavity and a lower end thereof being connected with respective mechanical arms. A plurality of bearings are provided between the mounting seat 230 and the second rotation shaft 234 to dynamic seal the cavity. The drive gear 232 and the master gear 234 both are helical gears.

The main rotary joint 23 further comprises an anti-backlash gear 235 engaging with the master gear 233, a sixth coder 236 connected onto the anti-backlash gear 235 for collecting and feeding back information of the rotational angle and the rotational speed of the fifth motor 231, a pair of second proximity switches 237 provided on the mounting seat 230 for calibrating an initial position and a maximum stroke position (i.e., 0 - 380 degrees) of the second rotary shaft 234, a sensor is provided on the master gear 233 and when the sensor is turned to a position directly facing the second proximity switch 237, the second proximity switch 237 detects a signal, and the controller of the nondestructive inspection robot works out the rotational angle and the rotational speed of the main rotary joint by conversion after receiving the above mentioned signal.

As shown in Figure 8, the swinging joint 26 comprises a drive sprocket 262 driven to rotate by a fourth motor 261, a driven sprocket 264 driven with the drive sprocket 262 via a chain 263, and a worm reducer 265 driven with the driven sprocket 264, an output shaft 2650 of the worm reducer 265 being detachably connected with the second mechanical arm 25b. The axial line of the output shaft 2650 of the worm reducer is perpendicular to the axial direction of the pressure vessel, and the axial direction of the second mechanical arm 25b, i.e., the axial direction of the first stretchable joint thereof is perpendicular to the axial line of the output shaft 2650 of the worm reducer.

The swinging joint 26 further comprises a second synchronous belt pulley 266 driven with the worm reducer, and a fifth coder 267 is connected to the second synchronous belt pulley 266 for collecting and feeding back information of the rotational angle of the output shaft 2650 of the worm reducer. After receiving the above mentioned feedback, the controller of the nondestructive inspection robot works out the swinging angle of the swinging joint 26 by further conversion so as to control the angle of the second mechanical arm 25b to change the position of the second probe assembly 24b within the lower head 12.

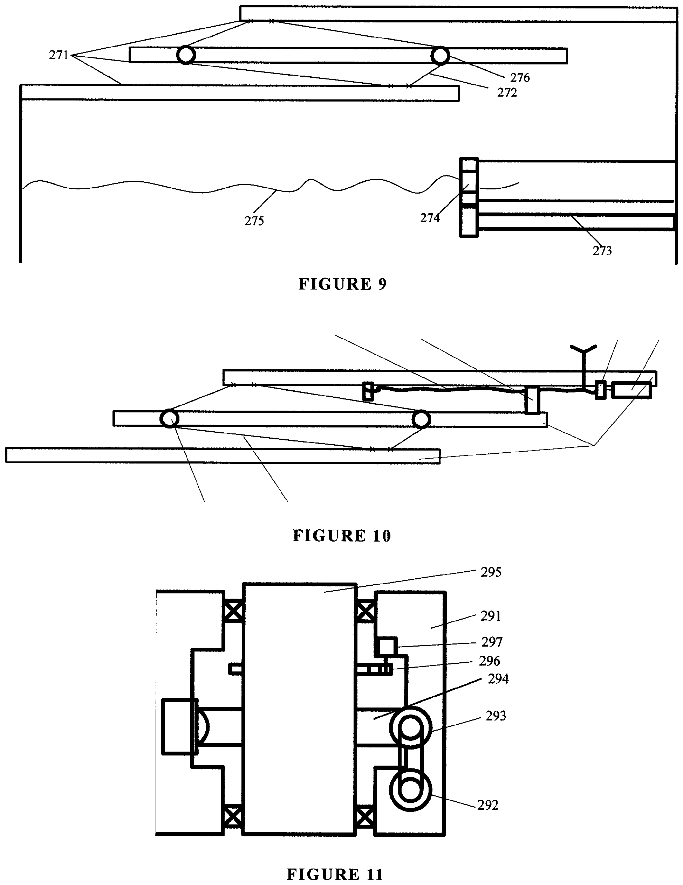

As shown in Figure 9, the first stretchable joint 27 comprises three layers of first sleeves 271 sleeving over each other, two first steel wire ropes 272, a first lead screw nut 274 driven to rotate by a second motor 273, and a first lead screw 275 fitting with the first lead screw nut 274, the first sleeve 271 has a first end and a second end (corresponding to the left and right on the paper of Figure 9) opposite to each other, the second end of an outer layer of the first sleeve 271 of the first stretchable joint 27 of the first mechanical arm 25a is detachably connected to the second rotation shaft 234 of the main rotary joint 23, the second end of an outer layer of the first sleeve 271 of the first stretchable joint 27 of the second mechanical arm 25b is connected to the output shaft of the worm reducer of the swinging joint 26; the first end of an inner layer of the first sleeve 271 is fixedly connected to and axially parallel to an end of the first lead screw 275 and also connected to the end rotary joint 29 and driven by the end rotary joint 29; the first end and the second end of the layer of the first sleeve 271 between the outer layer and the inner layer are both rotatably provided with a first pulley 276, the two first steel wire ropes 272 are respectively wound over one first pulley 276 and two ends thereof are respectively fixedly connected to the first end of the outer layer and the second end of the inner layer of the first sleeve 271, the winding directions of the two first steel wire ropes 272 are opposite. The first end of the inner layer of the first sleeve 271 is detachably connected with an extension block at rear end.

A third coder is provided on the second motor 273 for collecting and feeding back information of the rotational angle and the rotational speed of the second motor 273, a first proximity switch is provided on the inner layer of the first sleeve 271 of the first stretchable joint 27 for calibrating an initial position and a stop position of the inner layer of the sleeve 271, and a sensor fitting with the first proximity switch is detachably connected with the outer layer of the first sleeve. After receiving the above mentioned feedback, the controller of the nondestructive inspection robot works out the distance of linear movement of the swinging joint 27 by further conversion so as to control the stretching extent of the first/ second mechanical arm(25a, 25b) to change the radial position of the first/ second probe assembly (24a, 24b). The output shaft of the second motor is connected with the gear which deliveries the rotation to the nut.

As shown in Figure 10, the second stretchable joint 28 comprises three layers of second sleeves 281 sleeving over each other, two second steel wire ropes 282, a second lead screw 284 driven to rotate by a third motor 283, and a second lead screw nut 285 fitting with the second lead screw 284, the second sleeve 281 has a first end and a second end (corresponding to the left and right on the paper of Figure 10) opposite to each other, a middle part of an outer layer of the second sleeve 281 is detachably connected to the second rotation shaft 234 of the main rotary joint 23 to keep balance, the first end of an inner layer of the second sleeve 281 is connected to the end rotary joint 29, the second lead screw 284 is rotatably provided on the outer layer of the second sleeve 281 about its own axial line via a pair of supports and axially parallel to the outer layer of the second sleeve 281; the layer of the second sleeve 281 between the outer layer and the inner layer is fixedly connected with the second lead screw nut 285, the first end and the second end of the inner layer of the second sleeve 281 are both rotatably provided with a second pulley 286, the two second steel wire ropes 282 are respectively wound over one second pulley286 and two ends thereof are respectively fixedly connected to the first end of the outer layer and the second end of the inner layer of the second sleeves 281, the winding directions of the two second steel wire ropes 282 are opposite.

A fourth coder is provided on the third motor 283 for collecting and feeding back information of the rotational angle and the rotational speed of the third motor 283. After receiving the above mentioned feedback, the controller of the nondestructive inspection robot works out the distance of linear movement of the second stretchable joint 28 by further conversion so as to control the stretching extent of the third/ fourth mechanical arm(25c 25d) to change the radial position of the third/ fourth/ fifth probe assembly (24c, 24d, 24e).

As shown in Figure 11, the end rotary joint 29 comprises a fixing seat 291 having an inner cavity and detachably connected to the first stretchable joint 27 (the first end of the inner layer of the first sleeve 271) or the second stretchable joint 28 (the first end of the inner layer of the second sleeve 281), a worm 293 movably provided on the fixing seat 291 and driven to rotate by a first motor 292, a worm gear 294 fitting with the worm 293 and located within the inner cavity, a first rotation shaft 295 coaxially connected to the worm gear 294, and two first synchronous belt pulleys 296 driven by a belt; the first rotation shaft 295 is arranged through the inner cavity which is full of gas, a plurality of bearings and dynamic seal assemblies are provided between the first rotation shaft 295 and the fixing seat 291, and the first probe assembly 24a/ the second probe assembly 24b/ the third probe assembly 24c/ the fourth probe assembly 24d are mounted on the first rotation shaft 295. The bearings are used for supporting and provided with a plurality of dynamic seals outside to ensure that the end rotary joint 29 is able to be applied under water, and multiple layers of oil seals are employed to dynamically seal bearings, and meanwhile, gas pressure is applied to the inner cavity of the fixing seat 291 to hermetically seal it.

One of the two first synchronous belt pulleys 296 is coaxially connected to the first rotation shaft 295, the other one of the first synchronous belt pulleys 296 is connected with a first coder 297 for collecting and feeding back information of the angle position of the first rotation shaft 295, and a second coder is provided on the first motor 292 for collecting and feeding back information of the rotational angle and the rotational speed of the first motor 292. The second coder is a redundant configuration, for improving the precision of measurement on one hand, and for detecting and feeding back with the help of one coder when the other one fails on the other hand. The first coder 297 and the second coder both are electrically connected with the controller of the nondestructive inspection robot, and when the controller receives information fed back by the first coder 297 and/ or the second coder, it adjusts the position and speed of the end rotary joint 29 by controlling the rotating speed of the motor 292.

Overall, the first mechanical arm 25a consists of one first stretchable joint 27, one extension block 251a and one end rotary joint 29 from a beginning end to a terminal end, the second end of the outer layer of the first sleeve 271 of the first stretchable joint 27 is detachably connected to the lower part of the second rotation shaft 234 of the main rotary joint 23, the first end of the inner layer of the first sleeve 271 is detachably connected to an end of the extension block 251a, the other end of the extension block 251a is detachably connected to the fixing seat 291 of the end rotary joint 29, and the first rotation shaft 295 of the end rotary joint 29 is provided with the first probe assembly 24a;

The second mechanical arm 25b consists of one first stretchable joint 27, one extension block 251b and one end rotary joint 29 from a beginning end to a terminal end, the second end of the outer layer of the first sleeve 271 of the first stretchable joint 27 is detachably connected to the output shaft of the worm reducer of the swinging joint 26, the second end of the inner layer of the first sleeve 271 is detachably connected to the lower part of the second rotation shaft 234 of the main rotary joint 23, the first end of the inner layer of the first sleeve 271 is detachably connected to an end of the extension block 251a, the other end of the extension block 251a is detachably connected to the fixing seat 291 of the end rotary joint 29, and the first rotation shaft 295 of the end rotary joint 29 is provided with the second probe assembly 24b;

The third mechanical arm 25c consists of one second stretchable joint 28 and one end rotary joint 29 from a beginning end to a terminal end, the middle part of the outer layer of the second sleeve 281 of the second stretchable joint 28 is detachably connected to the lower part of the second rotation shaft 234 of the main rotary joint 23, the first end of the inner layer of the second sleeve 281 is detachably connected to the fixing seat 291 of the end rotary joint 29, and the first rotation shaft 295 of the end rotary joint 29 is provided with the third probe assembly 24c;

The fourth mechanical arm 25d consists of one second stretchable joint 28, one connection block 252 and one end rotary joint 29 from a beginning end to a terminal end, the middle part of the outer layer of the second sleeve 281 of the second stretchable joint 28 is detachably connected to the lower part of the second rotation shaft 234 of the main rotary joint 23, the first end of the inner layer of the second sleeve 281 is detachably connected to an end of the connection block 252, the lower part of the connection block 252 is detachably connected to the fixing seat 291 of the end rotary joint 29, the first rotation shaft 295 of the end rotary joint 29 is provided with the fourth probe assembly 24d, and the other end of the connection block 252 is provided with the fifth probe assembly 24e. The axial direction of the fifth probe assembly 24e is arranged perpendicular to the axial direction of the pressure vessel (i.e., horizontal) so as to directly face the bolt hole ligament area of the flange, and the axial direction of the fourth probe assembly 24d is arranged parallel to the axial direction of the pressure vessel and the axial direction of the bolt hole (i.e., vertical) so that the fourth probe assembly 24d gets close to the bolt hole to check.

Wherein, the third mechanical arm 25c and the fourth mechanical arm 25d are symmetrically arranged along the middle axial line of the stand column assembly 21 and above the first mechanical arm 25a and the second mechanical arm 25b, and when one of the mechanical arms fails or cannot complete the process in the field, the other mechanical arm may be utilized and quickly reassembled to achieve the scanning of the flange 11 or the tubular nuzzle 13; the fist mechanical arm 25a and the second mechanical arm 25b are basically symmetrically arranged, and when the first stretchable joint 27 or the end rotary joint 29 of one of mechanical arms fails or cannot complete the process in the field, the first stretchable joint 27 or the end rotary joint 29 of the other mechanical arm may utilized and quickly reassembled to achieve the scanning of the cylinder body 10 or the lower head 12.

As shown in Figure 2, the robot further comprises a first camera assembly 30a on a lower part of the main rotary joint 23 for monitoring respective mechanical arms. The robot further comprises a second camera assembly 30b on the second mechanical arm 25b for checking the whole inner wall of the pressure vessel 1. An extension block 251b is connected between the first stretchable joint 27 and the end rotary joint 29 of the second mechanical arm 25b, and the second camera assembly 30b is arranged on the extension block 251b. The cameras of the first camera assembly and the second camera assembly both are rotatably arranged so as to obtain a relative large range of video images.

The number of the support legs 22 is three, a guide column is provided in a part of the bolt holes of the flange 11 of the pressure vessel 1, the axial directions of the guide column and the stand column assembly 21 are parallel to each other, a through hole 220 is opened on two of the support legs 22 and fits with the guide column, the two support legs 22 are arranged through two guide columns to support the stand column assembly 21, respectively. The arrangement of the support legs 22 of the present invention is disclosed in "RPV Inspection Equipment Support Legs Design and Reliability Study" (NONDESTRUCTIVE TESTING, No. 11, 2013).

An inspection method of the foregoing nondestructive inspection robot for a pressure vessel of a CEPR-typed nuclear reactor of the present invention, comprises the following steps in the proper order:
A: arranging two support legs through two of the guide columns, and in proper order, video checking the lower head, ultrasonic scanning a circumferential weld between a transition ring cylinder section and the lower head, a bond zone between a base metal and an internal overlaying welding layer, a connection weld between a tubular nuzzle cylinder section and the tubular nuzzle, the bolt hole ligament area of the flange except where the support legs are located, and the screw thread of the bolt hole of the flange except where the support legs are located;
B: arranging two support legs through another two of the guide columns, and in proper order, ultrasonic scanning the screw thread of the bolt hole of the flange not scanned in step A, the bolt hole ligament area of the flange not scanned in step A, a dissimilar metal connection weld between the tubular nuzzle and a safe end, and circumferential welds between the tubular nuzzle cylinder section and a reactor core cylinder section as well as the reactor core cylinder section and the transition ring cylinder section, and checking the lower head;
C: getting the nondestructive inspection robot out.

The specific testing process is as follow:
a, Scanning the internal overlaying welding layer: the full range scanning is implemented by locating the first probe assembly 24a and the second probe assembly 24b to a specified position and state mainly via the swinging joint 26, the first stretchable joints 27 and the end rotary joints 29 of the first mechanical arm 25a and the second mechanical arm 25b, and by associated moving the stand column assembly 21 and the main rotary joint 23. The deepest position of the internal overlaying welding layer along the axial direction of the pressure vessel is 10532.5mm, the maximum scanning radius is 2442.5mm, and the circumferential scanning angle is 361 degrees (wherein with 1 degree of overlay area). The movement stroke range of the stand column assembly 21 and the main rotary joint 23 can cover the inspection area.
b, Scanning the connection weld between the transition ring section and respective guide block 16: the scanning method is similar to item a, and the full range scanning is implemented by locating the first probe assembly 24a and the second probe assembly 24b to a specified position and state mainly via the swinging joint 26, the first stretchable joints 27 and the end rotary joints 29 of the first mechanical arm 25a and the second mechanical arm 25b, and by associated moving the stand column assembly 21 and the main rotary joint 23. The deepest position of the connection weld of the guide block 16 along the axial direction of the pressure vessel is less than 9m, the maximum radius is 2442.5mm, and the circumferential scanning angle is 361 degrees (wherein with 1 degree of overlay area). The movement stroke range of the stand column assembly 21 and the main rotary joint 23 can cover the inspection area, the first stretchable joint 27 has a enough stroke to ensure the first probe assembly 24a/ the second probe assembly 24b may be stretched out and drawn back oppositely, and not interfere with the guide block 16 to avoid obstacle.
c, Scanning the thread of the bolt hole 11 of the flange: there are four bolt holes 111 of the flange of the pressure vessel of an CEPR reactor (A, B, C, D) mounted with guide columns therein, and in order to ensure all bolt holes 111 can be scanned, the robot inspects in a manner of installing for two times in a positive and negative position. For positive installing, the support legs 22 are arranged through the guide columns of bolt holes 111 A and B to inspect the bolt holes 111 C, D, etc.; for negative installing, the support legs 22 are arranged through the guide columns of bolt holes 111 C and D to inspect the bolt holes 111 A, B, etc. The inspection is implemented mainly by the fourth probe assembly 24d of the fourth mechanical arm 25d, the stand column assembly 21 and the second stretchable joint 28 are kept fixed, and the main rotary joint 23 and the end rotary joint 29 are used to move for scanning with a movement range over 361 degrees which satisfies the scanning range.
d, Scanning the connection weld between the tubular nuzzle cylinder section and the tubular nuzzle: the weld is mainly located at the position R = 2843.5mm of the pressure vessel, and the scanning is implemented mainly by the third probe assembly 24c on the third mechanical arm 25c. The stand column assembly 21 and the main rotary joint 23 are kept still for the positioning before scanning, and the second stretchable joint 28 and the end rotary joint 29 are used to implement the scanning along two directions, i.e. the axial direction and the circumferential direction of the tubular nuzzle.
e, Scanning the dissimilar metal connection weld between the tubular nuzzle and the safe end 14: the weld is mainly located at the position R = 3735mm of the pressure vessel, and the scanning method is similar to item d. The scanning is implemented mainly by the third probe assembly 24c on the third mechanical arm 25c. The stand column assembly 21 and the main rotary joint 23 are kept still for the positioning before scanning, and the second stretchable joint 28 and the end rotary joint 29 are used to implement the scanning along two directions, i.e. the axial direction and the circumferential direction of the tubular nuzzle.
f, Scanning the circumferential welds between the tubular nuzzle cylinder section and the reactor core cylinder section as well as the reactor core cylinder section and the transition ring cylinder section: location before scanning is implemented by locating to a specified position and state mainly via the swinging joint 26, the first stretchable joints and the end rotary joints 29 of the first mechanical arm 25a and the second mechanical arm 25b, and then the full range scanning is implemented by associated movement of the stand column assembly 21 and the main rotary joint 23.
g, Scanning the circumferential weld between the transition ring cylinder section and the lower head: it is implemented mainly by the second probe assembly 24b on the second mechanical arm 25b, the location before scanning is implemented by locating the stand column assembly 21, the first stretchable joints 27 and the end rotary joints 29 to a specific position and state, and then the full range scanning is implemented by associated movement of the man rotary joint 23 and the swinging joint 26.
h, Scanning the bond area between the base metal and the internal overlaying welding layer: the same with the scanning method of item a. In addition, the scanning method for the surfacing welding layer within the strong neutron irradiation area of the reactor core also is the same with the scanning method of item a.
i, Scanning the bolt hole ligament area 112 of the flange 11: the inspection is mainly implemented by the fifth probe assembly 24e of the fourth mechanical arm 25d. The location before scanning is implemented by the stand column assembly 21 and the second stretchable joint 28, and the scanning movement is implemented by the main rotary joint 23.

The embodiments described above are only for illustrating the technical concepts and features of the present invention, and intended to make those skilled in the art being able to understand the present invention and thereby implement it, and should not be concluded to limit the protective scope of this invention.

## Claims

1. A nondestructive inspection robot for a pressure vessel of a nuclear reactor, the pressure vessel comprising a cylinder body (10), a lower head (12), a tubular nozzle (13, 14, 15), and a flange with a bolt hole (111) and a bolt hole ligament area (112), wherein the robot comprises:
a stand column assembly (21) stretchable along an axial direction thereof;
a plurality of support legs (22) for supporting the stand column assembly (21), one end of each support leg (22) being fixedly connected to the stand column assembly (21) and another end being usable for detachably connecting onto the pressure vessel (1) so that when the plurality of support legs is connected to the pressure vessel (1), the central axis of the stand column assembly (21) and the axis line of the pressure vessel (1) coincide with each other;
a first mechanical arm (25a) provided with a first probe assembly (24a) for scanning the cylinder body (10) of the pressure vessel;
a second mechanical arm (25b) provided with a second probe assembly (24b) for scanning the lower head (12) of the pressure vessel;
a third mechanical arm (25c) provided with a third probe assembly (24c) for scanning the tubular nozzle (13, 14, 15) of the pressure vessel;
**characterized in that** the inspection robot further comprises:
a fourth mechanical arm (25d) provided with a fourth probe assembly (24d) for scanning the screw thread of the bolt hole (111) of the flange of the pressure vessel and a fifth probe assembly (24e) for scanning the bolt hole ligament area (112) of the flange of the pressure vessel;
a main rotary joint (23) rotatably connected to a lower part of the stand column assembly (21) about the axial direction of the stand column assembly (21), the second mechanical arm (25b) being rotatably connected to the main rotary joint (23) about a direction perpendicular to the axial direction of the stand column assembly (21) by means of a swinging joint (26), and other mechanical arms (25a, 25c, 25d) being detachably connected to the main rotary joint (23);
wherein, ends of each mechanical arms have an end rotary joint (29) rotating about the axial line of its own, the first mechanical arms (25a) and the second mechanical arm (25b) both have a first stretchable joint (27), the first stretchable joint (27) of the first mechanical arms (25a) is located between the main rotary joint (23) and the end rotary joint (29) thereof, the first stretchable joint (27) of the second mechanical arms (25b) is located between the swinging joint (26) and the end rotary joint (29) thereof, the third mechanical arm (25c) and the fourth mechanical arm (25d) both have a second stretchable joint (28) between the main rotary joint (23) and the end rotary joint (29) thereof, the end rotary joint (29) of the fourth mechanical arm (25d) has its axial line parallel to the axial direction of the pressure vessel when the plurality of support legs is connected to pressure vessel (1), and the end rotary joint (29) is connected to a lower part of the second stretchable joint (28), the first probe assembly (24a), the second probe assembly (24b), the third probe assembly (24c) and the fourth probe assembly (24d) are respectively mounted onto the end rotary joints (29) of respective mechanical arms, and the fifth probe assembly (24e) is mounted onto the second stretchable joint (28) of the fourth mechanical arm (25d) and provided right opposite the bolt hole ligament area (112) of the flange of the pressure vessel when the plurality of support legs is connected to pressure vessel (1).

2. The nondestructive inspection robot for a pressure vessel of a nuclear reactor according to claim 1, wherein the end rotary joint (29) comprises a fixing seat having an inner cavity and detachably connected to the first stretchable joint (27) or the second stretchable joint (28), a worm movably provided on the fixing seat and driven to rotate by a first motor, a worm gear fitting with the worm and located within the inner cavity, a first rotation shaft coaxially connected to the worm gear, and two first synchronous belt pulleys driven by a synchronous belt, the first rotation shaft is arranged through the inner cavity which is full of gas, a plurality of bearings and dynamic seal assemblies are provided between the first rotation shaft and the fixing seat, the first probe assembly (24a), the second probe assembly (24b), the third probe assembly (24c) and the fourth probe assembly (24d) are respectively mounted on the first rotation shaft, one of the first synchronous belt pulleys is coaxially connected to the first rotation shaft of respective end rotary joints, a first coder is connected with the other one of the first synchronous belt pulleys for collecting and feeding back information of the angle position of the first rotation shaft, and a second coder is provided on the first motor for collecting and feeding back information of the rotational angle and the rotational speed of the first motor.

3. The nondestructive inspection robot for a pressure vessel of a nuclear reactor according to claim 1, wherein the first stretchable joint (27) comprises three layers of first sleeves sleeving over each other, two first steel wire ropes, a first lead screw nut driven to rotate by a second motor, and a first lead screw fitting with the first lead screw nut, the first sleeve has a first end and a second end opposite to each other, the second end of an outer layer of the first sleeve of the first stretchable joint (27) of the first mechanical arm (25a) is connected to the main rotary joint (23), the second end of an outer layer of the first sleeve of the first stretchable joint (27) of the second mechanical arm (25b) is connected to the swinging joint (26), the first end of an inner layer of the first sleeve is fixedly connected to and axially parallel to an end of the first lead screw and also connected to the end rotary joint (29), the first end and the second end of the layer of the first sleeve between the outer layer and the inner layer are both rotatably provided with a first pulley, the two first steel wire ropes are respectively wound over one first pulley and two ends thereof are respectively fixedly connected to the first end of the outer layer and the second end of the inner layer of the first sleeve, the winding directions of the two first steel wire ropes are opposite, a third coder is provided on the second motor for collecting and feeding back information of the rotational angle and the rotational speed of the second motor, a first proximity switch is provided on the first stretchable joint (27) for calibrating an initial position and a stop position of the inner layer of the first sleeve.

4. The nondestructive inspection robot for a pressure vessel of a nuclear reactor according to claim 1, wherein the second stretchable joint (28) comprises three layers of second sleeves sleeving over each other, two second steel wire ropes, a second lead screw driven to rotate by a third motor, and a second lead screw nut fitting with the second lead screw, the second sleeve has a first end and a second end opposite to each other, a middle part of an outer layer of the second sleeve is connected to the main rotary joint (23), the first end of an inner layer of the second sleeve is connected to the end rotary joint (29), the second lead screw is rotatably provided on and axially parallel to the outer layer of the second sleeve about its own axial line, the layer of the second sleeve between the outer layer and the inner layer is fixedly connected with the second lead screw nut, the first end and the second end of the inner layer of the second sleeve are both rotatably provided with a second pulley, the two second steel wire ropes are respectively wound over one second pulley and two ends thereof are respectively fixedly connected to the first end of the outer layer and the second end of the inner layer of the second sleeve, the winding directions of the two second steel wire ropes are opposite, a fourth coder is provided on the third motor for collecting and feeding back information of the rotational angle and the rotational speed of the third motor.

5. The nondestructive inspection robot for a pressure vessel of a nuclear reactor according to claim 1, wherein the swinging joint (26) comprises a drive sprocket driven to rotate by a fourth motor, a driven sprocket driven with the drive sprocket via a chain, and a worm reducer driven with the driven sprocket, an output shaft of the worm reducer being detachably connected with the second mechanical arm (25b).

6. The nondestructive inspection robot for a pressure vessel of a nuclear reactor according to claim 1, wherein the main rotary joint (23) comprises a mounting seat with a cavity and detachably connected to the lower end of the stand column assembly (21), a fifth motor provided on the mounting seat, a drive gear driven to rotate by the fifth motor, a master gear engaging with the drive gear, a second rotation shaft coaxially connected to the master gear, the second rotation shaft being arranged through the cavity and a lower end thereof being connected with respective mechanical arms.

7. The nondestructive inspection robot for a pressure vessel of a nuclear reactor according to claim 1, wherein the nondestructive inspection robot for a pressure vessel of a nuclear reactor further comprises a windlass mechanism (20) for bringing the stand column assembly (21) to stretch out and draw back.

8. The nondestructive inspection robot for a pressure vessel of a nuclear reactor according to claim 7, wherein the stand column assembly (21) comprises two sleeved layers of third sleeves each with an upper end and a lower end opposite to each other, an end of the support leg is fixedly connected to an outer layer of the third sleeve, the windlass mechanism (20) comprises a support frame, the upper end of the outer layer of the third sleeve is fixedly connected to the support frame of the windlass mechanism (20), the upper end of the inner layer of the third sleeve is below the windlass mechanism and rotatably provided with a third pulley, a steel wire rope of the windlass mechanism (20) is wound on the third pulley from below and an end thereof is connected to the upper end of the outer layer of the third sleeve.

9. The nondestructive inspection robot for a pressure vessel of a nuclear reactor according to claim 7, wherein the stand column assembly (21) comprises a plurality of sleeved layers of third sleeves with an upper end and a lower end opposite to each other, the third sleeves are respectively denoted as B(1), B(2), ..., B(2i+1) from an outer layer to an inner layer, wherein i=1, 2, ..., the upper end of B(1) is fixedly connected to the windlass mechanism (20), the upper ends and the lower ends of B(2), B(3), ..., B(2i-1), B(2i) as well as the upper end of B(2i+1) are all rotationally provided with a third pulley, the windlass mechanism (20) comprises a support frame and two steel wire ropes for down-passing and pulling up respectively, the upper end of B(1) is fixedly connected to the support frame of the windlass mechanism (20), wherein an end of one of the steel wire ropes is fixedly connected to the lower end of B(1) and wound on the third pulleys of the lower end of B(2), the upper end of B(3), ..., the upper end of B(2i-1), the lower end of B(2i), and the upper end of B(2i+1) one after another, an end of the other one of the steel wire ropes is fixedly connected to the lower end of B(1) and wound on the third pulleys of the upper end of B(2), the lower end of B(3), ..., the lower end of B(2i-1), the upper end of B(2i), and the upper end of B(2i+1) one after another, winding directions of the two steel wire ropes on each third sleeve are opposite.

10. The nondestructive inspection robot for a pressure vessel of a nuclear reactor according to claim 9, wherein the windlass mechanism (20) further comprises a first winding drum and a second winding drum arranged on the support frame and driven to rotate by a sixth motor, steel wire ropes wound on the first winding drum and the second winding drum respectively for down-passing and pulling up, and a multiple-stage reducer mechanism located within the sixth motor as well as the first winding drum and the second winding drum, the first winding drum and the second winding drum have the same winding direction of the steel wire ropes but rotate in opposite directions, the steel wire ropes are arranged through between the first winding drum and the second winding drum and connected onto the stand column assembly (21), and the windlass mechanism (20) further comprises a seventh coder arranged on the multiple-stage reducer mechanism for collecting and feeding back information of the rotational angle of the first winding drum and the second winding drum.

11. The nondestructive inspection robot for a pressure vessel of a nuclear reactor according to claim 1, wherein the robot further comprises a first camera assembly on a lower part of the main rotary joint (23) for monitoring respective mechanical arms, and a second camera assembly on the second mechanical arms (25b) for checking the whole inner wall of the pressure vessel.

12. The nondestructive inspection robot for a pressure vessel of a nuclear reactor according to claim 11, wherein an extension block is connected between the first stretchable joint (27) and the end rotary joint (29) of the second mechanical arm (25b), and the second camera assembly is arranged on the extension block.

13. The nondestructive inspection robot for a pressure vessel of a nuclear reactor according to claim 1, wherein the number of the support legs is three, and when the plurality of support legs is connected to pressure vessel (1), a guide column is provided in a part of the bolt holes of the flange of the pressure vessel respectively, the axial directions of the guide column and the stand column assembly (21) are parallel to each other, a through hole is opened on two of the support legs and fits with the guide column, the two support legs are arranged through two guide columns to support the stand column assembly (21), respectively.

14. The nondestructive inspection robot for a pressure vessel of a nuclear reactor according to claim 1, wherein the fourth mechanical arm (25d) further comprises a connection block (252) detachably connected to the second stretchable joint (28) thereof, and the connection block has three end parts, a first end part thereof being connecting to the second stretchable joint (28), a second end part being provided with the fifth probe assembly (24e), and a third end part being connected to the end rotary joint (29).

15. An inspection method of the nondestructive inspection robot for a pressure vessel of a nuclear reactor according to any one of claims 1 - 14, **characterized in that**, the method
comprises the following steps in the proper order:
A: arranging two support legs through two of the guide columns, and in proper order, video checking the lower head, ultrasonic scanning a circumferential weld between a transition ring cylinder section and the lower head, a bond zone between a base metal and an internal overlaying welding layer, a connection weld between a tubular nuzzle cylinder section and the tubular nuzzle, the bolt hole ligament area of the flange except where the support legs are located, and the screw thread of the bolt hole of the flange except where the support legs are located;
B: arranging two support legs through another two of the guide columns, and in proper order, ultrasonic scanning the screw thread of the bolt hole of the flange not scanned in step A, the bolt hole ligament area of the flange not scanned in step A, a dissimilar metal connection weld between the tubular nuzzle and a safe end, and circumferential welds between the tubular nuzzle cylinder section and a reactor core cylinder section as well as the reactor core cylinder section and the transition ring cylinder section, and checking the lower head;
C: getting the nondestructive inspection robot out.

## Patentansprüche

1. Ein zerstörungsfreier Prüfroboter für einen Druckbehälter eines Kernreaktors, wobei der Druckbehälter einen Zylinderkörper (10), einen unteren Kopf (12), eine röhrenförmige Düse (13, 14, 15) und einen Flansch mit einem Bolzenloch (111) und einen Bolzenlochbandbereich (112) umfasst, wobei der Roboter umfasst:
eine Standsäulenbaugruppe (21), die entlang einer axialen Richtung derselben dehnbar ist;
eine Vielzahl von Stützbeinen (22) zum Tragen der Standsäulenbaugruppe (21), wobei ein Ende jedes Stützbeins (22) fest mit der Standsäulenbaugruppe (21) verbunden ist und ein anderes Ende zum lösbaren Verbinden mit dem Druckbehälter (1) verwendbar ist, so dass, wenn die Vielzahl von Stützbeinen mit dem Druckbehälter (1) verbunden ist, die Mittelachse der Standsäulenbaugruppe (21) und die Achsenlinie des Druckbehälters (1) miteinander übereinstimmen;
einen ersten mechanischen Arm (25a), der mit einer ersten Sondenbaugruppe (24a) zum Abtasten des Zylinderkörpers (10) des Druckbehälters vorgesehen ist;
einen zweiten mechanischen Arm (25b), der mit einer zweiten Sondenbaugruppe (24b) zum Abtasten des unteren Kopfes (12) des Druckbehälters vorgesehen ist;
einen dritten mechanischen Arm (25c), der mit einer dritten Sondenbaugruppe (24c) zum Abtasten der röhrenförmigen Düse (13, 14, 15) des Druckbehälters vorgesehen ist;
**dadurch gekennzeichnet, dass** der Prüfroboter ferner umfasst:
einen vierten mechanischen Arm (25d), der mit einer vierten Sondenbaugruppe (24d) zum Abtasten des Schraubgewindes des Bolzenlochs (111) des Flansches des Druckbehälters und einer fünften Sondenbaugruppe (24e) zum Abtasten des Bolzenlochbandbereichs (112) des Flansches des Druckbehälters vorgesehen ist;
ein Hauptdrehgelenk (23), das drehbar mit einem unteren Teil der Standsäulenbaugruppe (21) um die Axialrichtung der Standsäulenbaugruppe (21) verbunden ist, wobei der zweite mechanische Arm (25b) drehbar mit dem Hauptdrehgelenk (23) um eine Richtung senkrecht zur Axialrichtung der Standsäulenbaugruppe (21) mittels eines Schwenkgelenks (26) verbunden ist und die andere mechanische Arme (25a, 25c, 25d) lösbar mit dem Hauptdrehgelenk (23) verbunden sind;
wobei die Enden jedes mechanischen Arms ein Enddrehgelenk (29) aufweisen, das sich um die eigene axiale Linie dreht, wobei der erste mechanische Arm (25a) und der zweite mechanische Arm (25b) beide ein erstes dehnbares Gelenk (27) aufweisen, wobei das erste dehnbare Gelenk (27) des ersten mechanischen Arms (25a) zwischen dem Hauptdrehgelenk (23) und dem Enddrehgelenk (29) desselben angeordnet ist, das erste dehnbare Gelenk (27) des zweiten mechanischen Arms (25b) zwischen dem Schwenkgelenk (26) und dem Enddrehgelenk (29) desselben angeordnet ist, wobei der dritte mechanische Arm (25c) und der vierte mechanische Arm (25d) beide ein zweites dehnbares Gelenk (28) zwischen dem Hauptdrehgelenk (23) und dem Enddrehgelenk (29) derselben aufweisen, wobei das Enddrehgelenk (29) des vierten mechanischen Arms (25d) seine axiale Linie parallel zur axialen Richtung des Druckbehälters aufweist, wenn die Vielzahl von Stützbeinen mit dem Druckbehälter (1) verbunden ist, und wobei das Enddrehgelenk (29) mit einem unteren Teil des zweiten dehnbaren Gelenks (28) verbunden ist, wobei die erste Sondenbaugruppe (24a), die zweite Sondenbaugruppe (24b), die dritte Sondenbaugruppe (24c) und die vierte Sondenbaugruppe (24d) jeweils an dem Enddrehgelenk (29) des jeweiligen mechanischen Arms montiert sind und die fünfte Sondenbaugruppe (24e) an dem zweiten dehnbaren Gelenk (28) des vierten mechanischen Arms (25d) montiert und direkt gegenüber dem Bolzenlochbandbereich (112) des Flansches des Druckbehälters vorgesehen ist, wenn die Vielzahl von Stützbeinen mit dem Druckbehälter (1) verbunden ist.

2. Der zerstörungsfreie Prüfroboter für einen Druckbehälter eines Kernreaktors nach Anspruch 1, wobei das Enddrehgelenk (29) einen Befestigungssitz mit einem inneren Hohlraum, der lösbar mit dem ersten dehnbaren Gelenk (27) oder dem zweiten dehnbaren Gelenk (28) verbunden ist, eine Schnecke, die beweglich auf dem Befestigungssitz vorgesehen und von einem ersten Motor angetrieben ist, ein Schneckenrad, das mit der Schnecke montiert ist und sich innerhalb des inneren Hohlraums befindet, eine erste Drehachse, die koaxial mit dem Schneckenrad verbunden ist, und zwei erste Synchronriemenscheiben, die durch einen Synchronriemen angetrieben werden, umfasst, wobei die erste Drehachse durch den inneren Hohlraum angeordnet ist, der voller Gas ist, wobei eine Vielzahl von Lagern und dynamischen Dichtungsbaugruppen zwischen der ersten Drehachse und dem Befestigungssitz vorgesehen ist, wobei die erste Sondenbaugruppe (24a), die zweite Sondenbaugruppe (24b), die dritte Sondenbaugruppe (24c) und die vierte Sondenbaugruppe (24d) jeweils auf der ersten Drehachse montiert sind, wobei eine der ersten Synchronriemenscheiben koaxial mit der ersten Drehachse der jeweiligen Enddrehgelenke verbunden ist, wobei ein erster Codierer mit der anderen der ersten Synchronriemenscheiben zum Sammeln und Rückführen von Informationen über die Winkelposition der ersten Drehachse verbunden ist und ein zweiter Codierer am ersten Motor zum Sammeln und Rückführen von Informationen über den Drehwinkel und die Drehzahl des ersten Motors vorgesehen ist.

3. Der zerstörungsfreie Prüfroboter für einen Druckbehälter eines Kernreaktors nach Anspruch 1, wobei das erste dehnbares Gelenk (27) drei Schichten von ersten Hülsen, die übereinander geschichtet sind, zwei erste Stahldrahtseile, eine erste Leitspindelmutter, die von einem zweiten Motor angetrieben wird, und eine erste Leitspindel, die zu der ersten Leitspindelmutter passt, umfasst, wobei die erste Hülse ein erstes Ende und ein zweites Ende aufweist, die einander gegenüberliegen, das zweite Ende einer Außenschicht der ersten Hülse des ersten dehnbaren Gelenks (27) des ersten mechanischen Arms (25a) mit dem Hauptdrehgelenk (23) verbunden ist, das zweite Ende einer Außenschicht der ersten Hülse des ersten dehnbaren Gelenks (27) des zweiten mechanischen Arms (25b) mit dem Schwenkgelenk (26) verbunden ist, das erste Ende einer Innenschicht der ersten Hülse fest mit und axial parallel zu einem Ende der ersten Leitspindel und auch mit dem Enddrehgelenk (29) verbunden ist, das erste Ende und das zweite Ende der Schicht der ersten Hülse zwischen der Außenschicht und der Innenschicht beide drehbar mit einer ersten Riemenscheibe vorgesehen sind, die beiden ersten Stahlseile jeweils über eine erste Riemenscheibe gewickelt sind und zwei Enden derselben jeweils fest mit dem ersten Ende der Außenschicht und dem zweiten Ende der Innenschicht der ersten Hülse verbunden sind, die Wickelrichtungen der beiden ersten Stahlseile entgegengesetzt sind, ein dritter Codierer am zweiten Motor zum Sammeln und Rückführen von Informationen über den Drehwinkel und die Drehzahl des zweiten Motors vorgesehen ist, und ein erster Näherungsschalter am ersten dehnbaren Gelenk (27) zum Kalibrieren einer Ausgangsposition und einer Endposition der Innenschicht der ersten Hülse vorgesehen ist.

4. Der zerstörungsfreie Prüfroboter für einen Druckbehälter eines Kernreaktors nach Anspruch 1, wobei das zweite dehnbares Gelenk (28) drei Schichten von zweiten Hülsen, die übereinander gesleevt sind, zwei zweite Stahldrahtseile, eine zweite Leitspindel, die von einem dritten Motor angetrieben wird, und eine zweite Leitspindelmutter, die zu der zweiten Leitspindel passt, umfasst, wobei die zweite Hülse ein erstes Ende und ein zweites Ende aufweist, die einander gegenüberliegen, ein mittlerer Teil einer Außenschicht der zweiten Hülse mit dem Hauptdrehgelenk (23) verbunden ist, das erste Ende einer Innenschicht der zweiten Hülse mit dem Enddrehgelenk (29) verbunden ist, die zweite Leitspindel drehbar auf und achsparallel zur Außenschicht der zweiten Hülse um ihre eigene axiale Linie vorgesehen ist, die Schicht der zweiten Hülse zwischen der Außenschicht und der Innenschicht fest mit der zweiten Leitspindelmutter verbunden ist, das erste Ende und das zweite Ende der Innenschicht der zweiten Hülse beide drehbar mit einer zweiten Riemenscheibe vorgesehen sind, die beiden zweiten Stahlseile jeweils über eine zweite Riemenscheibe gewickelt sind und zwei Enden davon jeweils fest mit dem ersten Ende der Außenschicht und dem zweiten Ende der Innenschicht der zweiten Hülse verbunden sind, die Wickelrichtungen der beiden zweiten Stahlseile entgegengesetzt sind, und ein vierter Codierer am dritten Motor zum Sammeln und Zurückführen von Informationen über den Drehwinkel und die Drehzahl des dritten Motors vorgesehen ist.

5. Der zerstörungsfreie Prüfroboter für einen Druckbehälter eines Kernreaktors nach Anspruch 1, wobei das Schwenkgelenk (26) ein Antriebszahnrad, das von einem vierten Motor in Drehung versetzt wird, ein angetriebenes Zahnrad, das über eine Kette mittels des Antriebszahnrad angetrieben wird, und einen mittels des Antriebszahnrad angetriebenen Schneckenreduzier umfasst, wobei eine Abtriebsachse des Schneckengetriebes lösbar mit dem zweiten mechanischen Arm (25b) verbunden ist.

6. Der zerstörungsfreie Prüfroboter für einen Druckbehälter eines Kernreaktors nach Anspruch 1, wobei das Hauptdrehgelenk (23) einen Montagesitz, der mit einem Hohlraum und lösbar mit dem unteren Ende der Standsäulenbaugruppe (21) verbunden ist, einen fünften Motor, der auf dem Montagesitz vorgesehen ist, ein Antriebszahnrad, das durch den fünften Motor angetrieben wird, ein mit dem Antriebszahnrad in Eingriff stehendes Hauptzahnrad, und eine zweite Drehachse, die koaxial mit dem Hauptzahnrad verbunden ist, umfasst, wobei die zweite Drehachse durch den Hohlraum angeordnet und ein unteres Ende davon mit dem jeweiligen mechanischen Armen verbunden ist.

7. Der zerstörungsfreie Prüfroboter für einen Druckbehälter eines Kernreaktors nach Anspruch 1, wobei der zerstörungsfreie Prüfroboter für einen Druckbehälter eines Kernreaktors ferner einen Windenmechanismus (20) umfasst, um die Standsäulenbaugruppe (21) zum Ausstrecken und Zurückziehen zu bringen.

8. Der zerstörungsfreie Prüfroboter für einen Druckbehälter eines Kernreaktors nach Anspruch 7, wobei die Standsäulenbaugruppe (21) zwei gesleevte Schichten von dritten Hülsen mit jeweils einem oberen Ende und einem unteren Ende umfasst, die einander gegenüberliegen, ein Ende des Stützbeins fest mit einer Außenschicht der dritten Hülse verbunden ist, der Windenmechanismus (20) einen Tragrahmen umfasst, das obere Ende der Außenschicht der dritten Hülse fest mit dem Tragrahmen des Windenmechanismus (20) verbunden ist, das obere Ende der Innenschicht der dritten Hülse unterhalb des Windenmechanismus liegt und drehbar mit einer dritten Riemenscheibe vorgesehen ist, ein Stahldrahtseil des Windenmechanismus (20) von unten auf die dritte Riemenscheibe gewickelt ist und ein Ende davon mit dem oberen Ende der Außenschicht der dritten Hülse verbunden ist.

9. Der zerstörungsfreie Prüfroboter für einen Druckbehälter eines Kernreaktors nach Anspruch 7, wobei die Standsäulenbaugruppe (21) eine Vielzahl von gesleevten Schichten von dritten Hülsen mit einem oberen Ende und einem unteren Ende umfasst, die einander gegenüberliegen, die dritten Hülsen jeweils als B(1), B(2), ...., B(2i+1) von einer Außenschicht zu einer Innenschicht bezeichnet werden, wobei i=1, 2, ...., das obere Ende von B(1) fest mit dem Windenmechanismus (20) verbunden ist, die oberen Enden und die unteren Enden von B(2), B(3), ...., B(2i-1), B(2i-1), B(2i+1) sowie das obere Ende von B(2i+1) alle drehbar mit einer dritten Riemenscheibe vorgesehen sind, der Windenmechanismus (20) einen Tragrahmen und zwei Stahlseile zum Herunter- bzw. Hochziehen umfasst, das obere Ende von B(1) fest mit dem Tragrahmen des Windenmechanismus (20) verbunden ist, wobei ein Ende eines der Stahldrahtseile fest mit dem unteren Ende von B(1) verbunden und nacheinander auf die dritten Riemenscheiben des unteren Endes von B(2), des oberen Endes von B(3), ...., des oberen Endes von B(2i-1), des unteren Endes von B(2i) und des oberen Endes von B(2i+1) gewickelt ist, und ein Ende des anderen der Stahldrahtseile ist fest mit dem unteren Ende von B(1) verbunden ist und nacheinander auf die dritten Riemenscheiben des oberen Endes von B(2), des unteren Endes von B(3), ...., des unteren Endes von B(2i-1), des oberen Endes von B(2i) und des oberen Endes von B(2i+1) gewickelt ist, wobei die Wickelrichtungen der beiden Stahlseile auf jeder dritten Hülse entgegengesetzt sind.

10. Der zerstörungsfreie Prüfroboter für einen Druckbehälter eines Kernreaktors nach Anspruch 9, wobei der Windenmechanismus (20) ferner eine erste Wickeltrommel und eine zweite Wickeltrommel, die auf dem Tragrahmen angeordnet und von einem sechsten Motor in Drehung versetzt werden, Stahldrahtseile, die auf die erste Wickeltrommel und die zweite Wickeltrommel zum Herunterfahren und Hochziehen gewickelt sind, und einen mehrstufigen Untersetzungsgetriebemechanismus, der sich innerhalb des sechsten Motors sowie der ersten Wickeltrommel und der zweiten Wickeltrommel befindet, umfasst, wobei die erste Wickeltrommel und die zweite Wickeltrommel die gleiche Wickelrichtung der Stahldrahtseile aufweisen, sich aber gegenläufig drehen, die Stahldrahtseile zwischen der ersten Wickeltrommel und der zweiten Wickeltrommel durchgehend angeordnet und mit der Standsäulenbaugruppe (21) verbunden sind, und der Windenmechanismus (20) ferner einen siebten Codierer umfasst, der am mehrstufigen Untersetzungsgetriebe zum Sammeln und Zurückführen von Informationen über den Drehwinkel der ersten Wickeltrommel und der zweiten Wickeltrommel angeordnet ist.

11. Der zerstörungsfreie Prüfroboter für einen Druckbehälter eines Kernreaktors nach Anspruch 1, wobei der Roboter ferner eine erste Kameraeinheit an einem unteren Teil des Hauptdrehgelenks (23) zum Überwachen der jeweiligen mechanischen Arme und eine zweite Kameraeinheit an dem zweiten mechanischen Arm (25b) zum Überprüfen der gesamten Innenwand des Druckbehälters umfasst.

12. Der zerstörungsfreie Prüfroboter für einen Druckbehälter eines Kernreaktors nach Anspruch 11, wobei ein Verlängerungsblock zwischen dem ersten dehnbaren Gelenk (27) und dem Enddrehgelenk (29) des zweiten mechanischen Arms (25b) verbunden ist und die zweite Kamerabaugruppe auf dem Verlängerungsblock angeordnet ist.

13. Der zerstörungsfreie Prüfroboter für einen Druckbehälter eines Kernreaktors nach Anspruch 1, wobei die Anzahl der Stützbeine drei beträgt, und wenn die Vielzahl der Stützbeine mit dem Druckbehälter (1) verbunden ist, eine Führungssäule in einem Teil der Bolzenlöcher des Flansches des Druckbehälters vorgesehen ist, wobei die Axialrichtungen der Führungssäule und der Standsäulenbaugruppe (21) parallel zueinander sind, ein Durchgangsloch an zwei der Stützbeine geöffnet ist und auf die Führungssäule passt, und die beiden Stützbeine durch zwei Führungssäulen angeordnet sind, um die Standsäulenbaugruppe (21) zu stützen.

14. Der zerstörungsfreie Prüfroboter für einen Druckbehälter eines Kernreaktors nach Anspruch 1, wobei der vierte mechanische Arm (25d) ferner einen Verbindungsblock (252) umfasst, der lösbar mit dem zweiten dehnbaren Gelenk (28) derselben verbunden ist, und der Verbindungsblock drei Endteile aufweist, wobei ein erster Endteil mit dem zweiten dehnbaren Gelenk (28) verbunden ist, ein zweiter Endteil mit der fünften Sondenbaugruppe (24e) vorgesehen ist und ein dritter Endteil mit dem Enddrehgelenk (29) verbunden ist.

15. Ein Prüfverfahren des zerstörungsfreien Prüfroboters für einen Druckbehälter eines Kernreaktors nach einem der Ansprüche 1-14, **dadurch gekennzeichnet, dass** das Verfahren die folgenden Schritte in der richtigen Reihenfolge umfasst:
A: Anordnen von zwei Stützbeinen durch zwei der Führungssäulen und in richtiger Reihenfolge, Videoüberprüfen des unteren Kopfes, Ultraschallabtasten einer Umfangsschweißung zwischen einem Übergangsringzylinderabschnitt und dem unteren Kopf, einer Bindungszone zwischen einem Grundmetall und einer innenliegenden Schweißschicht, einer Verbindungsschweißung zwischen einem rohrförmigen Düsenzylinderabschnitt und der rohrförmigen Düse, dem Bolzenlochbandbereich des Flansches, außer wo sich die Stützbeine befinden, und dem Schraubengewinde des Bolzenlochs des Flansches, außer wo sich die Stützbeine befinden;
B: Anordnen von zwei Stützbeinen durch weitere zwei der Führungssäulen und in richtiger Reihenfolge, Ultraschallabtasten des Schraubgewindes des Bolzenlochs des in Schritt A nicht abgetasteten Flansches, des in Schritt A nicht abgetasteten Bolzenlochbandbereichs des Flansches, einer ungleichen Metallverbindungsschweißung zwischen der rohrförmigen Düse und einem sicheren Ende, und von Umfangsschweißungen zwischen dem rohrförmigen Düsenzylinderabschnitt und einem Reaktorkernzylinderabschnitt sowie dem Reaktorkernzylinderabschnitt und dem Übergangsringzylinderabschnitt, und Überprüfen des unteren Kopfes;
C: Herausholden des zerstörungsfreien Prüfroboters.

## Revendications

1. Robot d'inspection non destructrice pour une cuve sous pression d'un réacteur nucléaire, la cuve sous pression comprenant un corps de cylindre (10), une tête inférieure (12), une buse tubulaire (13, 14, 15) et une bride munie d'un trou de boulon (111) et d'une zone de ligament de trou de boulon (112), dans lequel le robot comprend :
un assemblage de colonne support (21) qui est extensible suivant sa direction axiale ;
une pluralité de jambages de support (22) pour supporter l'assemblage de colonne support (21), une extrémité de chaque jambage de support (22) étant connectée de façon fixe à l'assemblage de colonne support (21) et une autre extrémité pouvant être utilisée pour une connexion de façon amovible sur la cuve sous pression (1) de telle sorte que, lorsque les jambages de la pluralité de jambages de support sont connectés à la cuve sous pression (1), l'axe central de l'assemblage de colonne support (21) et la ligne d'axe de la cuve sous pression (1) coïncident l'un avec l'autre ;
un premier bras mécanique (25a) qui est muni d'un premier assemblage de sonde (24a) pour scanner par balayage le corps de cylindre (10) de la cuve sous pression ;
un deuxième bras mécanique (25b) qui est muni d'un deuxième assemblage de sonde (24b) pour scanner par balayage la tête inférieure (12) de la cuve sous pression ;
un troisième bras mécanique (25c) qui est muni d'un troisième assemblage de sonde (24c) pour scanner par balayage la buse tubulaire (13, 14, 15) de la cuve sous pression ;
**caractérisé en ce que** le robot d'inspection comprend en outre :
un quatrième bras mécanique (25d) qui est muni d'un quatrième assemblage de sonde (24d) pour scanner par balayage le filetage du trou de boulon (111) de la bride de la cuve sous pression et d'un cinquième assemblage de sonde (24e) pour scanner par balayage la zone de ligament de trou de boulon (112) de la bride de la cuve sous pression ;
une articulation rotoïde principale (23) qui est connectée à rotation à une partie inférieure de l'assemblage de colonne support (21) autour de la direction axiale de l'assemblage de colonne support (21), le deuxième bras mécanique (25b) étant connecté à rotation à l'articulation rotoïde principale (23) autour d'une direction qui est perpendiculaire à la direction axiale de l'assemblage de colonne support (21) au moyen d'une articulation pivotante (26), et les autres bras mécaniques (25a, 25c, 25d) étant connectés de façon amovible à l'articulation rotoïde principale (23) ; dans lequel :
des extrémités de chacun des bras mécaniques comportent une articulation rotoïde d'extrémité (29) qui est entraînée en rotation autour de sa propre ligne axiale, le premier bras mécanique (25a) et le deuxième bras mécanique (25b) comportent tous deux une première articulation extensible (27), la première articulation extensible (27) du premier bras mécanique (25a) est localisée entre l'articulation rotoïde principale (23) et son articulation rotoïde d'extrémité (29), la première articulation extensible (27) du deuxième bras mécanique (25b) est localisée entre l'articulation pivotante (26) et son articulation rotoïde d'extrémité (29), le troisième bras mécanique (25c) et le quatrième bras mécanique (25d) comportent tous deux une seconde articulation extensible (28) entre l'articulation rotoïde principale (23) et leurs articulations rotoïdes d'extrémité (29), l'articulation rotoïde d'extrémité (29) du quatrième bras mécanique (25d) a sa ligne axiale qui est parallèle à la direction axiale de la cuve sous pression lorsque les jambages de la pluralité de jambages de support sont connectés à la cuve sous pression (1), et l'articulation rotoïde d'extrémité (29) est connectée à une partie inférieure de la seconde articulation extensible (28), le premier assemblage de sonde (24a), le deuxième assemblage de sonde (24b), le troisième assemblage de sonde (24c) et le quatrième assemblage de sonde (24d) sont respectivement montés sur les articulations rotoïdes d'extrémité (29) de bras mécaniques respectifs, et le cinquième assemblage de sonde (24e) est monté sur la seconde articulation extensible (28) du quatrième bras mécanique (25d) et est positionné juste en face de la zone de ligament de trou de boulon (112) de la bride de la cuve sous pression lorsque les jambages de la pluralité de jambages de support sont connectés à la cuve sous pression (1).

2. Robot d'inspection non destructrice pour une cuve sous pression d'un réacteur nucléaire selon la revendication 1, dans lequel l'articulation rotoïde d'extrémité (29) comprend un siège de fixation qui comporte une cavité interne et qui est connecté de façon amovible à la première articulation extensible (27) ou à la seconde articulation extensible (28), une vis sans fin qui est prévue de façon mobile sur le siège de fixation et qui est entraînée en rotation par un premier moteur, un engrenage à vis sans fin qui est adapté par engrenage avec la vis sans fin et qui est localisé à l'intérieur de la cavité interne, un premier arbre de rotation qui est connecté de façon coaxiale à l'engrenage à vis sans fin et deux premières poulies à courroie synchrone qui sont entraînées par une courroie synchrone, le premier arbre de rotation est agencé au travers de la cavité interne qui est remplie de gaz, une pluralité de paliers et d'assemblages d'étanchéité dynamiques sont prévus entre le premier arbre de rotation et le siège de fixation, le premier assemblage de sonde (24a), le deuxième assemblage de sonde (24b), le troisième assemblage de sonde (24c) et le quatrième assemblage de sonde (24d) sont respectivement montés sur le premier arbre de rotation, l'une des premières poulies à courroie synchrone est connectée de façon coaxiale au premier arbre de rotation d'articulations rotoïdes d'extrémité respectives, un premier codeur est connecté avec l'autre des premières poulies à courroie synchrone pour collecter et fournir en retour une information qui est constituée par la position angulaire du premier arbre de rotation, et un deuxième codeur est prévu sur le premier moteur pour collecter et fournir en retour une information qui est constituée par l'angle de rotation et par la vitesse de rotation du premier moteur.

3. Robot d'inspection non destructrice pour une cuve sous pression d'un réacteur nucléaire selon la revendication 1, dans lequel la première articulation extensible (27) comprend trois couches de premiers manchons qui s'emmanchent les uns au-dessus des autres, deux premiers câbles métalliques en acier, un premier écrou pour tige filetée qui est entraîné en rotation par un deuxième moteur, et une première tige filetée qui est adaptée par vissage avec le premier écrou pour tige filetée, le premier manchon comporte une première extrémité et une seconde extrémité qui sont opposées l'une à l'autre, la seconde extrémité d'une couche externe du premier manchon de la première articulation extensible (27) du premier bras mécanique (25a) est connectée à l'articulation rotoïde principale (23), la seconde extrémité d'une couche externe du premier manchon de la première articulation extensible (27) du deuxième bras mécanique (25b) est connectée à l'articulation pivotante (26), la première extrémité d'une couche interne du premier manchon est connectée de façon fixe et de manière axialement parallèle à une extrémité de la première tige filetée et est également connectée à l'articulation rotoïde d'extrémité (29), la première extrémité et la seconde extrémité de la couche du premier manchon entre la couche externe et la couche interne sont toutes deux munies à rotation d'une première poulie, les deux premiers câbles métalliques en acier sont respectivement enroulés sur une première poulie et leurs deux extrémités sont respectivement connectées de façon fixe à la première extrémité de la couche externe et à la seconde extrémité de la couche interne du premier manchon, les sens d'enroulement des deux premiers câbles métalliques en acier sont opposés, un troisième codeur est prévu sur le deuxième moteur pour collecter et fournir en retour une information qui est constituée par l'angle de rotation et par la vitesse de rotation du deuxième moteur, un premier détecteur de proximité est prévu sur la première articulation extensible (27) pour étalonner une position initiale et une position d'arrêt de la couche interne du premier manchon.

4. Robot d'inspection non destructrice pour une cuve sous pression d'un réacteur nucléaire selon la revendication 1, dans lequel la seconde articulation extensible (28) comprend trois couches de deuxièmes manchons qui s'emmanchent les uns au-dessus des autres, deux seconds câbles métalliques en acier, une seconde tige filetée qui est entraînée en rotation par un troisième moteur, et un second écrou pour tige filetée qui est adapté par vissage avec la seconde tige filetée, le deuxième manchon comporte une première extrémité et une seconde extrémité qui sont opposées l'une à l'autre, une partie intermédiaire d'une couche externe du deuxième manchon est connectée à l'articulation rotoïde principale (23), la première extrémité d'une couche interne du deuxième manchon est connectée à l'articulation rotoïde d'extrémité (29), la seconde tige filetée est prévue à rotation sur et de manière axialement parallèle à la couche externe du deuxième manchon autour de sa propre ligne axiale, la couche du deuxième manchon entre la couche externe et la couche interne est connectée de façon fixe avec le second écrou pour tige filetée, la première extrémité et la seconde extrémité de la couche interne du deuxième manchon sont toutes deux munies à rotation d'une deuxième poulie, les deux seconds câbles métalliques en acier sont respectivement enroulés sur une deuxième poulie et leurs deux extrémités sont respectivement connectées de façon fixe à la première extrémité de la couche externe et à la seconde extrémité de la couche interne du deuxième manchon, les sens d'enroulement des deux seconds câbles métalliques en acier sont opposés, un quatrième codeur est prévu sur le troisième moteur pour collecter et fournir en retour une information qui est constituée par l'angle de rotation et par la vitesse de rotation du troisième moteur.

5. Robot d'inspection non destructrice pour une cuve sous pression d'un réacteur nucléaire selon la revendication 1, dans lequel l'articulation pivotante (26) comprend un pignon d'entraînement qui est entraîné en rotation par un quatrième moteur, un pignon entraîné qui est entraîné avec le pignon d'entraînement via une chaîne et un réducteur à vis sans fin qui est entraîné avec le pignon entraîné, un arbre de sortie du réducteur à vis sans fin étant connecté de façon amovible avec le deuxième bras mécanique (25b).

6. Robot d'inspection non destructrice pour une cuve sous pression d'un réacteur nucléaire selon la revendication 1, dans lequel l'articulation rotoïde principale (23) comprend un siège de montage qui est muni d'une cavité et qui est connecté de façon amovible à l'extrémité inférieure de l'assemblage de colonne support (21), un cinquième moteur qui est prévu sur le siège de montage, un engrenage d'entraînement qui est entraîné en rotation par le cinquième moteur, un engrenage maître qui s'engrène avec l'engrenage d'entraînement, un second arbre de rotation qui est connecté de façon coaxiale à l'engrenage maître, le second arbre de rotation étant agencé au travers de la cavité et son extrémité inférieure étant connectée à des bras mécaniques respectifs.

7. Robot d'inspection non destructrice pour une cuve sous pression d'un réacteur nucléaire selon la revendication 1, dans lequel le robot d'inspection non destructrice pour une cuve sous pression d'un réacteur nucléaire comprend en outre un mécanisme de treuil (20) pour amener l'assemblage de colonne support (21) dans des conditions d'extension et de contraction.

8. Robot d'inspection non destructrice pour une cuve sous pression d'un réacteur nucléaire selon la revendication 7, dans lequel l'assemblage de colonne support (21) comprend deux couches à manchons qui comportent des troisièmes manchons chacune dont une extrémité supérieure et une extrémité inférieure sont opposées l'une à l'autre, une extrémité du jambage de support est connectée de façon fixe à une couche externe du troisième manchon, le mécanisme de treuil (20) comprend un bâti de support, l'extrémité supérieure de la couche externe du troisième manchon est connectée de façon fixe au bâti de support du mécanisme de treuil (20), l'extrémité supérieure de la couche interne du troisième manchon est au-dessous du mécanisme de treuil et elle est munie à rotation d'une troisième poulie, un câble métallique en acier du mécanisme de treuil (20) est enroulé sur la troisième poulie depuis le dessous et son extrémité est connectée à l'extrémité supérieure de la couche externe du troisième manchon.

9. Robot d'inspection non destructrice pour une cuve sous pression d'un réacteur nucléaire selon la revendication 7, dans lequel l'assemblage de colonne support (21) comprend une pluralité de couches à manchons de troisièmes manchons dont une extrémité supérieure et une extrémité inférieure sont opposées l'une à l'autre, les troisièmes manchons sont respectivement indiqués par B(1), B(2), ..., B(2i + 1) depuis une couche externe jusqu'à une couche interne, où i = 1, 2, ..., l'extrémité supérieure de B(1) est connectée de façon fixe au mécanisme de treuil (20), les extrémités supérieures et les extrémités inférieures de B(2), B(3), ..., B(2i - 1), B(2i) de même que l'extrémité supérieure de B(2i + 1) sont toutes munies à rotation d'une troisième poulie, le mécanisme de treuil (20) comprend un bâti de support et deux câbles métalliques en acier respectivement pour un passage par le bas et pour une traction vers le haut, l'extrémité supérieure de B(1) est connectée de façon fixe au bâti de support du mécanisme de treuil (20), dans lequel une extrémité de l'un des câbles métalliques en acier est connectée de façon fixe à l'extrémité inférieure de B(1) et est enroulée sur les troisièmes poulies de l'extrémité inférieure de B(2), de l'extrémité supérieure de B(3), ..., de l'extrémité supérieure de B(2i - 1), de l'extrémité inférieure de B(2i) et de l'extrémité supérieure de B(2i + 1) les uns après les autres, une extrémité de l'autre des câbles métalliques en acier est connectée de façon fixe à l'extrémité inférieure de B(1) et est enroulée sur les troisièmes poulies de l'extrémité supérieure de B(2), de l'extrémité inférieure de B(3), ..., de l'extrémité inférieure de B(2i - 1), de l'extrémité supérieure de B(2i) et de l'extrémité supérieure de B(2i + 1) les uns après les autres, les sens d'enroulement des deux câbles métalliques en acier sur chaque troisième manchon sont opposés.

10. Robot d'inspection non destructrice pour une cuve sous pression d'un réacteur nucléaire selon la revendication 9, dans lequel le mécanisme de treuil (20) comprend en outre un premier tambour d'enroulement et un second tambour d'enroulement qui sont agencés sur le bâti de support et qui sont entraînés en rotation par un sixième moteur, des câbles métalliques en acier qui sont enroulés sur le premier tambour d'enroulement et sur le second tambour d'enroulement respectivement pour un passage par le bas et pour une traction vers le haut, et un mécanisme de réducteur à multiples niveaux qui est localisé à l'intérieur du sixième moteur de même que le premier tambour d'enroulement et que le second tambour d'enroulement, le premier tambour d'enroulement et le second tambour d'enroulement présentent le même sens d'enroulement des câbles métalliques en acier mais ils sont entraînés en rotation dans des sens opposés, les câbles métalliques en acier sont agencés à travers l'espace entre le premier tambour d'enroulement et le second tambour d'enroulement et ils sont connectés sur l'assemblage de colonne support (21), et le mécanisme de treuil (20) comprend en outre un septième codeur qui est agencé sur le mécanisme réducteur à multiples niveaux pour collecter et fournir en retour une information qui est constituée par les angles de rotation du premier tambour d'enroulement et du second tambour d'enroulement.

11. Robot d'inspection non destructrice pour une cuve sous pression d'un réacteur nucléaire selon la revendication 1, dans lequel le robot comprend en outre un premier assemblage de caméra sur une partie inférieure de l'articulation rotoïde principale (23) pour surveiller des bras mécaniques respectifs, et un second assemblage de caméra sur le deuxième bras mécanique (25b) pour vérifier la totalité de la paroi interne de la cuve sous pression.

12. Robot d'inspection non destructrice pour une cuve sous pression d'un réacteur nucléaire selon la revendication 11, dans lequel un bloc d'extension est connecté entre la première articulation extensible (27) et l'articulation rotoïde d'extrémité (29) du deuxième bras mécanique (25b), et le second assemblage de caméra est agencé sur le bloc d'extension.

13. Robot d'inspection non destructrice pour une cuve sous pression d'un réacteur nucléaire selon la revendication 1, dans lequel le nombre de jambages de support est de trois, et lorsque les jambages de la pluralité de jambages de support sont connectés à la cuve sous pression (1), une colonne de guidage est prévue dans une partie des trous de boulon de la bride de la cuve sous pression, de façon respective, les directions axiales de la colonne de guidage et de l'assemblage de colonne support (21) sont parallèles l'une à l'autre, un trou traversant est ménagé sur deux des jambages de support et il reçoit par emboîtement la colonne de guidage, les deux jambages de support sont agencés au travers de deux colonnes de guidage de manière à ce qu'ils supportent respectivement l'assemblage de colonne support (21).

14. Robot d'inspection non destructrice pour une cuve sous pression d'un réacteur nucléaire selon la revendication 1, dans lequel le quatrième bras mécanique (25d) comprend en outre un bloc de connexion (252) qui est connecté de façon amovible à sa seconde articulation extensible (28), et le bloc de connexion comporte trois parties d'extrémité, sa première partie d'extrémité étant connectée à la seconde articulation extensible (28), sa deuxième partie d'extrémité étant munie du cinquième assemblage de sonde (24e) et sa troisième partie d'extrémité étant connectée à l'articulation rotoïde d'extrémité (29).

15. Procédé d'inspection du robot d'inspection non destructrice pour une cuve sous pression d'un réacteur nucléaire selon l'une quelconque des revendications 1 à 14, **caractérisé en ce que** le procédé comprend les étapes qui suivent selon l'ordre approprié :
A : l'agencement de deux jambages de support au travers de deux des colonnes de guidage et, selon un ordre approprié, la vérification par vidéo de la tête inférieure, le scannage par balayage à ultrasons d'une soudure circonférentielle entre une section de cylindre annulaire de transition et la tête inférieure, d'une zone de liaison entre un métal de base et une couche de soudage sus-jacente interne, d'une soudure de connexion entre une section de cylindre de buse tubulaire et la buse tubulaire, de la zone de ligament de trou de boulon de la bride à l'exception de l'endroit au niveau duquel les jambages de support sont localisés, et du filetage du trou de boulon de la bride à l'exception de l'endroit au niveau duquel les jambages de support sont localisés ;
B : l'agencement de deux jambages de support au travers de deux autres des colonnes de guidage et, selon un ordre approprié, le scannage par balayage à ultrasons du filetage du trou de boulon de la bride qui n'a pas été scanné par balayage au niveau de l'étape A, de la zone de ligament de trou de boulon de la bride qui n'a pas été scannée par balayage au niveau de l'étape A, d'une soudure de connexion de métal dissemblable entre la buse tubulaire et une extrémité sûre, et de soudures circonférentielles entre la section de cylindre de buse tubulaire et une section de cylindre de coeur de réacteur de même qu'entre la section de cylindre de coeur de réacteur et la section de cylindre annulaire de transition, et la vérification de la tête inférieure ;
C : l'extraction du robot d'inspection non destructrice.
